# FASCICULE DE BREVET EUROPEEN

(11) **EP 4 639 838 B1**
(45) Date de publication et mention de la délivrance du brevet: **04.11.2026**
(21) Numéro de dépôt: 23847745.9
(22) Date de dépôt: 22.12.2023
(51) Int. Cl.: H04L 9/08, H04L 9/14, H04L 9/32, H04L 9/00, H04L 9/40, H04W 12/40, G06Q 20/36

(54) **PROCÉDÉ POUR LA SAUVEGARDE ET LA RESTAURATION D'UN SECRET DÉTENU PAR UN PORTEFEUILLE DE CRYPTOACTIFS**
VERFAHREN ZUR SICHERUNG UND WIEDERHERSTELLUNG EINES GEHEIMNISSES, DAS VON EINER WALLET VON KRYPTOWÄHRUNGEN GEHALTEN WIRD
METHOD FOR SAFEGUARDING AND RESTORING A SECRET HELD BY A CRYPTOASSET WALLET

(30) Priorité: 23.12.2022 FR 2214386; 23.12.2022 FR 2214387; 23.12.2022 FR 2214391
(43) Date de publication de la demande: 29.10.2025
(73) Titulaire: LEDGER, 75003 Paris (FR)
(72) Inventeur: CASTILLO, Laurent, 92150 SURESNES (FR); RASOAMIARAMANANA, Andrianina Sandra, 91440 BURES-SUR-YVETTE (FR); ROCHA FURTADO, Daniel, 93160 NOISY-LE-GRAND (FR)
(74) Mandataire: Marchand, André
(86) Numéro de dépôt international: PCT/FR2023/000196
(87) Numéro de publication internationale: WO 2024/134038

(56) Documents cités:
- EP-A1- 3 073 670
- EP-A1- 3 550 458
- US-A1- 2020 145 227
- US-A1- 2022 166 605
- REZAEIGHALEH HOSSEIN ET AL: "New Secure Approach to Backup Cryptocurrency Wallets", 2019 IEEE GLOBAL COMMUNICATIONS CONFERENCE (GLOBECOM), IEEE, 9 December 2019 (2019-12-09), pages 1 - 6, XP033722714, DOI: 10.1109/GLOBECOM38437.2019.9014007
- LEDGER: "Ledger Nano S Security Target", 18 October 2018 (2018-10-18), XP093033870, Retrieved from the Internet <URL:https://www.ssi.gouv.fr/uploads/2019/02/anssi-cible-cspn-2019_03en.pdf> [retrieved on 20230322]

## Description

### Domaine Technique

La présente invention concerne un procédé pour la sauvegarde et la restauration d'un secret détenu par un dispositif électronique, et un procédé pour sécuriser la sauvegarde et la restauration d'un secret détenu par un dispositif électronique. La présente invention concerne également la sécurisation d'une liaison de données sécurisée entre un dispositif électronique et un serveur. La présente invention concerne notamment les portefeuilles matériels déterministes hiérarchiques utilisés pour le stockage de clés privées permettant de gérer des comptes sur la blockchain.

### Arrière-plan

Ces dernières années, le développement des cryptomonnaies ou autres types de cryptoactifs gérés par la blockchain, tels que les jetons non fongibles ("NFT") et les contrats intelligents ("Smart Contracts"), a donné naissance à divers moyens de stockage et de conservation des clés privées et publiques attachées à ces différents types de cryptoactifs. C'est ainsi que sont apparus les portefeuilles de cryptoactifs communément appelés "wallets" permettant le stockage et la conservation de ces clés. Un portefeuille de cryptoactifs est un dispositif matériel ou logiciel dont la fonction est de stocker les clés privées et publiques attachées à des comptes de cryptoactifs, et de signer des transactions au moyen de ces clés. On distingue les portefeuilles dits "chauds" ("hot wallets") et les portefeuilles dit froids ("cold wallets"). Les portefeuilles "chauds " sont connectés à l'Internet et susceptibles d'attaques de pirates ou d'exposition à des virus et malwares. Il peut s'agir de portefeuilles gérés par des plateformes d'échange centralisé ou de programmes installés sur des téléphones mobiles, tablettes ou ordinateurs personnels ("software wallets"). De tels portefeuilles sont connectés à Internet et donc eux-mêmes susceptibles d'attaques. Les portefeuilles "froids" ou portefeuilles matériels ("hardware wallet") sont en revanche dépourvus de tout accès direct à Internet, ce qui réduit la surface d'attaque et donc le risque de vol par piratage informatique. Un portefeuille matériel est généralement un dispositif électronique portatif, équipé d'un processeur ayant des moyens de calcul cryptographique. Les transactions mettant en jeu des clés privées sont signées dans un environnement hors ligne. Toute transaction réalisée en ligne est temporairement transférée vers le portefeuille matériel pour y être signée numériquement hors ligne, avant que la signature ne soit transmise au réseau en ligne. Comme les clés privées ne sont pas communiquées aux serveurs en ligne pendant le processus de signature, un pirate informatique ne peut pas y accéder.

Un tel type de portefeuille matériel est donc aujourd'hui considéré comme la solution la plus sûre contre les attaques de pirates informatiques. Son seul inconvénient réside dans le risque de perte, de vol ou de destruction (incendie par exemple) du portefeuille matériel, ou de perte du mode de passe personnel de l'utilisateur permettant de s'en servir. Les clés qu'il contient doivent donc généralement être sauvegardées en lieu sûr.

Un premier problème qui s'est posé dans le passé a été de trouver un moyen de simplifier le nombre de clés à sauvegarder, celles-ci pouvant être très nombreuses si l'utilisateur possède de nombreux comptes de cryptoactifs sur la blockchain. Pour solutionner ce problème, le portefeuille déterministe hiérarchique a été proposé par Bitcoin. D'abord proposé dans la norme BIP32, puis optimisé avec les normes BIP39, BIP43 et BIP44, il permet à un utilisateur de ne pas avoir à réaliser une nouvelle sauvegarde pour toute nouvelle paire de clés générée, une unique sauvegarde pour l'ensemble des clés de son portefeuille étant suffisante. Cette solution est aujourd'hui utilisée par la grande majorité des portefeuilles de cryptoactifs logiciels ou matériels.

Avec un portefeuille déterministe hiérarchique, toutes les clés privées de l'utilisateur sont générées à partir d'une graine aléatoire d'origine, généralement appelée "seed" ou "master key" (clé maître). Il suffit qu'un utilisateur conserve en lieu sûr la graine pour récupérer toutes ses clés, qui sont dérivées de la graine et peuvent être reconstituées à partir de celle-ci ("clés enfants").

Afin de faciliter la mémorisation et le stockage de la graine, la norme BIP39 prévoit également d'exprimer la graine, qui est un nombre binaire de grande longueur, sous la forme d'une phrase mnémonique appelée aussi "phrase de récupération" ("recovery phrase"). Le type exact de graine BIP39 utilisé actuellement dans les appareils de la demanderesse est une phrase de récupération qui se compose de 24 mots choisis dans une liste de 2048 mots définis par la norme précitée.

Pour la génération d'une phrase de récupération, un portefeuille matériel génère une séquence de 256 bits aléatoires à l'aide d'un générateur de nombres aléatoires. Les 8 premiers bits d'un hachage SHA-256 des 256 bits initiaux sont ajoutés à cette chaîne de bits, ce qui donne 264 bits. Les 264 bits sont répartis en 24 groupes de 11 bits par l'appareil. Chaque groupe de 11 bits est interprété comme un nombre compris entre 0 et 2047, qui sert d'index à la liste de mots BIP39, ce qui permet d'obtenir la phrase mnémonique de 24 mots. Ce type de portefeuille ne nécessite donc qu'une seule sauvegarde de la graine, de préférence au moment de sa mise en service, à partir de laquelle il est possible de dériver l'ensemble de l'arbre descendant de clés.

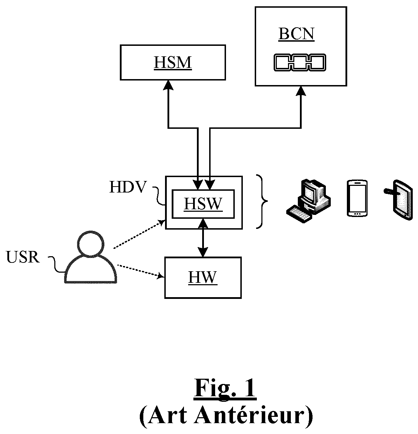

La figure 1 montre schématiquement un portefeuille de cryptoactifs comprenant un portefeuille matériel HW, par exemple le dispositif commercialisé par la demanderesse sous l'appellation "Nano" ou "Stax", et un dispositif hôte HDV exécutant une application compagnon HSW, par exemple l'application "Ledger Live" développée par la demanderesse. Le dispositif HW ne pouvant pas se connecter directement à l'Internet, il est associé au dispositif hôte HDV pour réaliser des transactions sur la blockchain. Le dispositif hôte HDV est par exemple un ordinateur, un téléphone mobile, une tablette ou équivalent. La connexion entre le dispositif HW et le dispositif hôte HDV peut être de type USB ou Bluetooth par exemple.

Une fois relié au dispositif hôte, le dispositif HW peut interagir avec le logiciel compagnon pour permettre à un utilisateur USR de réaliser des transactions sur la blockchain BCN ou sur des sites d'échange décentralisé. Le dispositif HW peut par ailleurs communiquer avec un module de sécurité HSM ("Hardware Security Module") situé dans un datacenter. Le module HSM est classiquement un boîtier de chiffrement matériel permettant de générer, stocker et protéger des clés cryptographiques.. Le module HSM ne stocke aucune clé privée de l'utilisateur et assure seulement le contrôle de l'authenticité du dispositif HW, sa mise en service, la mise à jour de son système d'exploitation, le téléchargement de programmes d'application certifiés, etc.

Lors de la première mise en service du dispositif HW, celui-ci fournit à l'utilisateur une phrase de récupération de 24 mots que celui-ci devra conserver sur un support physique approprié, par exemple une feuille de papier ou un support inaltérable tel une plaque de métal gravée, qu'il devra conserver en lieu sûr.

Une telle conservation en lieu sûr de la phrase de récupération ne va pas sans poser de problèmes. En effet, si un tiers s'empare de la phrase de récupération, le tiers pourra accéder à l'ensemble des comptes de cryptoactifs de l'utilisateur générés à partir de la graine et transférer sur d'autres comptes les sommes qu'ils comportent, et il sera ensuite très difficile de l'identifier.

Il pourrait donc être souhaité de prévoir un moyen permettant d'offrir aux utilisateurs un moyen simple et pratique pour conserver leur phrase de récupération de manière hautement sécurisée.

### Résumé

Des modes de réalisation concernent un procédé pour la sauvegarde et la restauration d'un secret détenu par un premier portefeuille de cryptoactifs qui est la propriété d'un utilisateur, le procédé comprenant les étapes consistant à générer, au moyen du portefeuille de cryptoactifs, une pluralité de données secrètes à partir du secret, sauvegarder les données secrètes dans une pluralité de serveurs de sauvegarde, chaque serveur de sauvegarde recevant au moins une donnée secrète, restaurer le secret dans un deuxième portefeuille de cryptoactifs à partir de tout ou partie des données secrètes détenues par les serveurs de sauvegarde. Selon le procédé, l'étape de sauvegarde des données secrètes est précédée d'une étape initiale de collecte d'informations relatives à l'identité de l'utilisateur, et d'une étape de communication, à chaque serveur de sauvegarde, des informations relatives à l'identité de l'utilisateur, et l'étape de restauration est précédée d'une pluralité d'étapes de vérification de l'identité de l'utilisateur par au moins une partie des serveurs de sauvegarde, un serveur de sauvegarde configuré pour vérifier l'identité de l'utilisateur étant également configuré pour refuser de restituer la donnée secrète qu'il détient si la vérification de l'identité de l'utilisateur n'est pas concluante.

Selon un mode de réalisation, le procédé comprend également, après l'étape initiale de collecte d'informations relatives à l'identité de l'utilisateur, une étape de vérification de l'identité de l'utilisateur.

Selon un mode de réalisation, l'étape de sauvegarde des donnés secrètes n'est pas effectuée si la vérification initiale de l'identité de l'utilisateur n'est pas concluante.

Selon un mode de réalisation, les informations relatives à l'identité de l'utilisateur définissent une identité pivot de l'utilisateur qui comprend au moins le prénom de l'utilisateur, le nom de famille de l'utilisateur et la date de naissance de l'utilisateur, et dans lequel au moins une étape de vérification de l'identité de l'utilisateur se rapporte à la vérification de son identité pivot.

Selon un mode de réalisation, au moins une étape de vérification de l'identité de l'utilisateur est conduite par un serveur de vérification d'identité, l'étape de vérification de l'identité de l'utilisateur comprenant une étape de création d'un chemin de données entre le portefeuille de cryptoactifs et le serveur de vérification d'identité, pour la communication au serveur de vérification d'identité d'informations recueillies par le portefeuille de cryptoactifs.

Selon un mode de réalisation, l'étape de restauration comprend, en relation avec la restauration d'au moins deux données secrètes par deux serveurs de sauvegarde, au moins deux étapes de vérification de l'identité de l'utilisateur différentes, et dans lequel deux étapes de vérification de l'identité de l'utilisateur différentes se fondent sur des informations différentes fournies par l'utilisateur, et/ou sur des méthodes différentes pour recueillir les informations fournies par l'utilisateur, et/ou sur des méthodes ou des algorithmes différents pour analyser les informations fournies par l'utilisateur.

Selon un mode de réalisation, une étape de vérification de l'identité de l'utilisateur comprend une étape d'acquisition d'au moins une photographie ou vidéo de l'utilisateur et/ou d'une pièce d'identité de l'utilisateur.

Selon un mode de réalisation, des étapes de vérification de l'identité de l'utilisateur sont conduites par des services exécutés par des serveurs et comprennent des étapes automatisées de vérification de l'identité comprenant des étapes d'acquisition à distance d'informations à partir desquelles l'identité de l'utilisateur est vérifiée, les étapes d'acquisition à distance d'informations comprenant au moins deux des étapes suivantes : acquisition d'une photo d'une pièce d'identité comprenant une photo de l'utilisateur, acquisition d'une ou de plusieurs photos du visage de l'utilisateur, acquisition d'un enregistrement vidéo montrant le visage de l'utilisateur en mouvement, acquisition d'une justification de domicile, acquisition d'une empreinte digitale de l'utilisateur, acquisition d'un code de validation reçu par l'utilisateur dans un message, activation par l'utilisateur d'un lien reçu par l'utilisateur dans un message, et acquisition d'un hologramme présent sur une pièce d'identité.

Selon un mode de réalisation le procédé comprend, lorsque les étapes automatisées de vérification de l'identité de l'utilisateur ne sont pas concluantes, des étapes de vérification de l'identité de l'utilisateur conduites par des personnes physiques, telles que la conduite d'un entretien téléphonique avec l'utilisateur, la conduite d'une vidéo conférence avec l'utilisateur, la conduite d'un entretien en face à face avec l'utilisateur, la validation d'un parcours scolaire ou d'un parcours d'employé de l'utilisateur.

Selon un mode de réalisation, le procédé comprend la prévision d'un programme orchestrateur exécuté par un serveur, le premier ou le deuxième portefeuilles de cryptoactifs étant configurés pour établir une liaison de données avec le programme orchestrateur avant de réaliser l'étape de sauvegarde ou de restauration, le programme orchestrateur étant configuré pour conduire ou contrôler au moins une étape de collecte d'informations relatives à l'identité de l'utilisateur.

Selon un mode de réalisation, le programme orchestrateur est configuré pour, lors de la restauration des données, recevoir de chaque serveur de sauvegarde configuré pour conduire une vérification de l'identité de l'utilisateur une information sur le succès de la vérification d'identité conduite par le serveur de sauvegarde, et si un nombre déterminé de serveurs de sauvegarde n'a pas vérifié avec succès l'identité de l'utilisateur, suspendre le processus de restauration des données dans son ensemble, y compris par les serveurs qui ont vérifié avec succès l'identité de l'utilisateur, et optionnellement soumettre l'utilisateur à une étape supplémentaire de vérification de son identité.

Selon un mode de réalisation, le programme orchestrateur est également configuré pour recevoir de chaque serveur de sauvegarde, lors de la restauration des données, un score de certitude quant à vérification de l'identité de l'utilisateur, et si la moyenne des scores est inférieure à un premier seuil, ou si l'un des scores est inférieur à un deuxième seuil, suspendre le processus de restauration des données dans son ensemble et optionnellement soumettre l'utilisateur à une étape supplémentaire de vérification de son identité.

Selon un mode de réalisation, le premier portefeuille de cryptoactifs est configuré pour, après avoir reçu l'autorisation de sauvegarde des données secrètes, établir avec chaque serveur de sauvegarde une liaison de données par laquelle il fournit à chaque serveur la donnée secrète qui lui est destinée.

Selon un mode de réalisation, le premier portefeuille de cryptoactifs est configuré pour générer la pluralité de données secrètes à partir de clé maître au moyen d'une fonction de partage de secret configurée pour générer un nombre m de données secrètes et permettre la reconstitution de la graine à partir d'un seuil de n données secrètes, et le deuxième portefeuille de cryptoactifs est configuré pour reconstituer la clé maître à partir d'au moins n données secrètes reçues lors de l'étape de restauration.

Selon un mode de réalisation, le premier et le deuxième portefeuilles de cryptoactifs comprennent chacun un portefeuille matériel dépourvu de moyen de connexion à l'Internet et un dispositif hôte pourvu d'une connexion à l'Internet et exécutant un logiciel compagnon.

Selon un mode de réalisation, le procédé est mis en œuvre avec trois serveurs de sauvegarde et utilisant une fonction de partage de secret configurée pour générer m données secrètes à partir du secret et permettre la reconstitution du secret à partir d'au moins n données secrètes, n étant inférieur à m.

### Description sommaire des dessins

Ces caractéristiques ainsi que d'autres de la présente invention, seront mieux comprises à la lecture de la description suivante, faite à titre non limitatif en relation avec les figures jointes parmi lesquelles :
- la figure 1 précédemment décrite montre schématiquement un portefeuille de cryptoactifs et un exemple d'utilisation de celui-ci,
- la figure 2A et la figure 2B montrent un portefeuille de cryptoactifs selon l'invention et l'architecture d'un système prévu pour la mise en œuvre d'un premier mode de réalisation du procédé selon l'invention, la figure 2A illustrant une étape de sauvegarde de données et la figure 2B une étape de restauration des données,
- la figure 3A et la figure 3B montrent un portefeuille de cryptoactifs selon l'invention et l'architecture d'un système prévu pour la mise en œuvre d'un deuxième mode de réalisation du procédé selon l'invention, la figure 3A illustrant une étape de sauvegarde de données et la figure 3B une étape de restauration des données,
- la figure 4A décrit un algorithme exécuté par le système des figures 3A, 3B, lors de l'étape de sauvegarde de données,
- la figure 4B est un diagramme de séquences qui représente les étapes de l'algorithme de la figure 4A sous forme d'interactions entre différents éléments du système des figures 3A, 3B,
- la figure 5A décrit un algorithme exécuté par le système des figures 3A, 3B, lors de l'étape de restauration de données,
- la figure 5B est un diagramme de séquences qui représente les étapes de l'algorithme de la figure 5A sous forme d'interactions entre différents éléments du système des figures 3A, 3B,
- la figure 6A et la figure 6B montrent un portefeuille de cryptoactifs selon l'invention et l'architecture d'un système prévu pour la mise en œuvre d'un troisième mode de réalisation du procédé selon l'invention, la figure 6A illustrant une étape de sauvegarde de données et la figure 6B une étape de restauration des données,
- la figure 7 montre un portefeuille de cryptoactifs selon l'invention et un exemple d'architecture de portefeuille matériel selon l'invention permettant la mise en œuvre du procédé selon l'invention,
- la figure 8 montre des étapes conduites par l'utilisateur du portefeuille matériel de la figure 7 pour la sauvegarde de la graine stockée dans le portefeuille matériel,
- la figure 9 montre des étapes conduites par l'utilisateur du portefeuille matériel de la figure 7 pour la restauration de la graine,
- la figure 10 montre un autre mode de réalisation d'un portefeuille de cryptoactifs permettant de mettre en œuvre le procédé selon l'invention,
- la figure 11 montre encore un autre mode de réalisation d'un portefeuille de cryptoactifs permettant de mettre en œuvre le procédé selon l'invention.

### Description détaillée

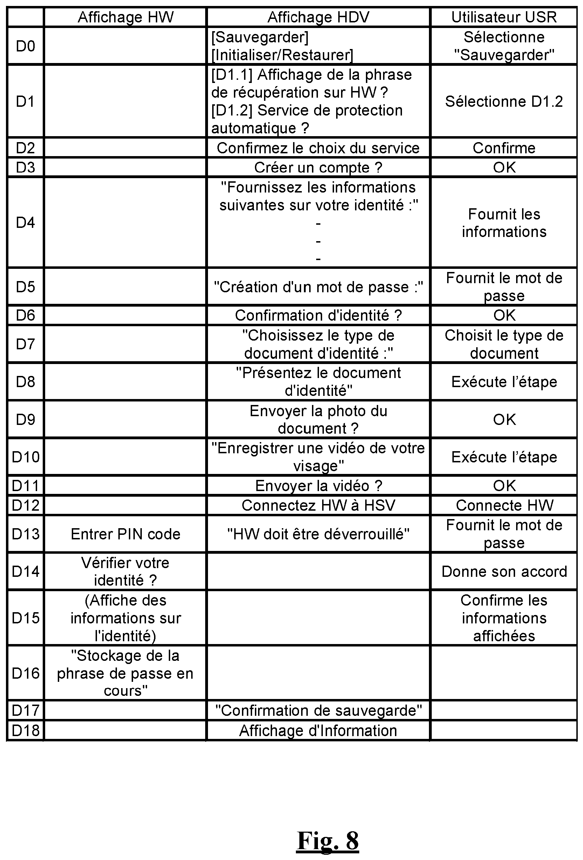

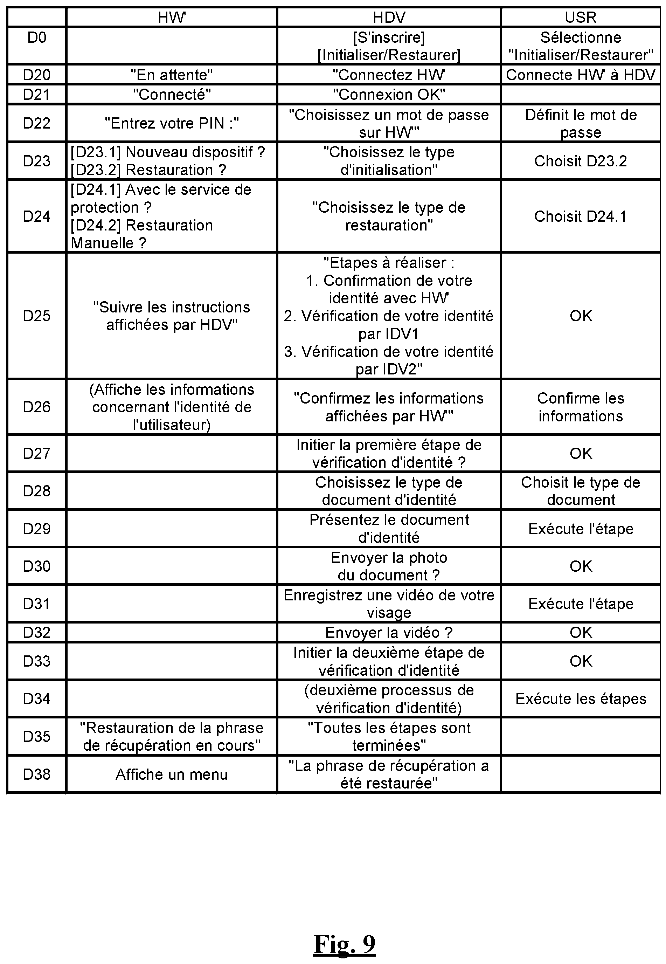

L'invention prévoit un procédé permettant de réaliser un portefeuille de cryptoactifs offrant une fonctionnalité unique dans le domaine des portefeuilles matériels, à savoir une fonctionnalité de sauvegarde de la graine qui est automatisée tout en étant hautement sécurisée. Une telle fonctionnalité permet aux utilisateurs de s'affranchir de toutes les difficultés et dangers qui s'attachent au fait de devoir préserver eux-mêmes dans un lieu sûr une phrase de récupération. Les fonctionnalités uniques offertes par un portefeuille de cryptoactifs selon l'invention seront décrites plus loin en relation avec les figures 8, 9 et les tableaux 2 et 3. Des modes de réalisation du procédé selon l'invention seront tout d'abord décrits.

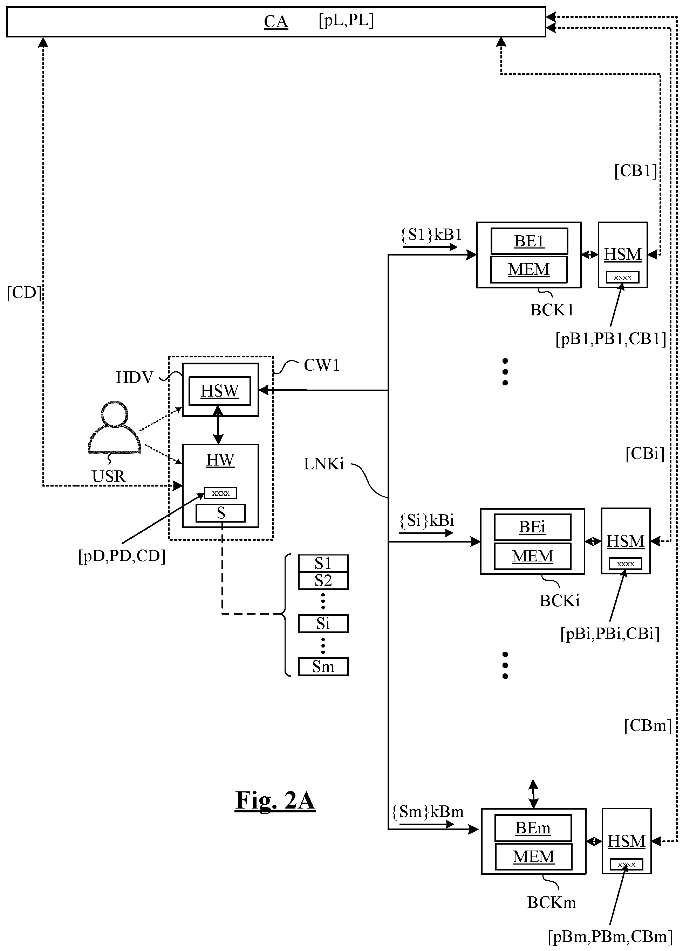

La figure 2A montre un portefeuille de cryptoactifs CW1 et un système prévu pour la mise en œuvre d'un mode de réalisation du procédé de l'invention. Le portefeuille de cryptoactifs CW1 comprend ici un dispositif HW et un dispositif hôte HDV. Le dispositif HW est un portefeuille matériel ("hardware wallet") assurant le stockage à froid d'une graine S ou clé maître, d'un ensemble de cryptoactifs. Le dispositif HW ne comporte aucun moyen de connexion à l'internet et est relié au dispositif hôte HDV, qui exécute un logiciel compagnon HSW lui permettant de se relier à l'Internet, par exemple au moyen d'une liaison USB ou Bluetooth. Le système et le procédé selon l'invention permettent de sauvegarder ou de restaurer la graine S (clé maître) stockée dans le dispositif HW.

Le système comprend essentiellement un ensemble de m serveur de sauvegarde BCKi (BCK1, BCK2,... BCKi,... BCKm) pourvu chacun d'une mémoire de sauvegarde MEM (disque dur magnétique ou mémoire à l'état solide) pour sauvegarder des parts Si de la graine S. Chaque serveur de sauvegarde comporte un programme dorsal BEi (BE1,... BEi,... BEm), ou programme "back-end", conçu pour la mise en œuvre du procédé. Chaque serveur de sauvegarde BCKi est également associé à un module de sécurité HSM.

Selon le procédé de l'invention, le dispositif HW est configuré pour diviser la graine S en une pluralité de données secrètes Si (S1, S2...Si,...Sm) qui seront sauvegardées sur les serveurs BCKi. Plutôt qu'un simple fractionnement, qui n'est toutefois pas exclu du champ de la présente invention, cette "division" est de préférence assurée au moyen d'une fonction de partage de secret SS permettant de générer un nombre m de données secrètes appelées "parts " ("shares"), et permettant la reconstitution de la graine à partir d'un seuil de n données secrètes Si :
S1, S2,..., Si,..., Sm = SS (S)

Par exemple si m est égal à 3 et *n* égal à 2, la fonction SS permet de diviser la graine en trois parts S1, S2, S3 mais deux parts seulement seront nécessaires pour reconstituer la graine.

Lorsque l'utilisateur souhaite sauvegarder sa graine, le dispositif HW établit avec chaque serveur de sauvegarde BCKi, par l'intermédiaire du dispositif hôte HDV, des liaisons de données LNKi (LNK1 à LNKm), par exemple de type HTTPS. Ces liaisons de données sont ensuite sécurisées par la création de canaux sécurisés de type SCP ("Secure Channel Protocol") entre le dispositif HW et chaque serveur de sauvegarde BCKi, d'une manière qui va être décrite.

La création de tels canaux sécurisés est assurée au moyen d'une infrastructure à clés publiques gérée par une autorité de certification CA. Le dispositif HW et les serveurs de sauvegarde BCKi possèdent chacun une clé privée, une clé publique, un certificat signé par l'autorité de certification, ou certificat statique, ainsi que la clé publique de l'autorité de certification. La notation suivante sera utilisée dans ce qui suit :
pL : clé privée de l'autorité de certification
PL : clé publique de l'autorité de certification
pD : clé privée du dispositif HW
PD : clé publique du dispositif HW
CD = [PD, Sign(pL, PD)] : certificat du dispositif (certificat statique), comprenant sa clé publique PD et une signature de sa clé publique au moyen de la clé privée pL de l'autorité de certification
pBi : clé privée d'un serveur BCKi (pour i allant de i à m)
PBi : clé publique d'un serveur BCKi (pour i allant de i à m)
CBi = [PBi, Sign(pL, PBi)] : certificat d'un serveur BCKi (certificat statique), comprenant sa clé publique PD et une signature de sa clé publique au moyen de la clé privée pL de l'autorité de certification.

La fonction de signature "Sign" est par exemple générée au moyen d'un algorithme de signature ECDSA basé sur les courbes elliptiques ("Elliptic Curve Digital Signature Algorithm").

L'autorité de certification CA est de préférence détenue par le fabricant du dispositif HW, pour lui permettre de contrôler l'allocation de certificats CBi aux serveurs de sauvegarde BCKi. Les serveurs de sauvegarde BCKi peuvent quant à eux être détenus par le fabricant du dispositif HW, ou être des serveurs de tiers partenaires participant à la mise en œuvre du procédé. Les clés pBi, PBi des serveurs de sauvegarde BCKi sont détenues par leurs modules HSM respectifs, qui prennent en charge les calculs cryptographiques réalisés au moyen de ces clés. Dans ce qui suit et dans un souci de simplification du langage, on considérera que de tels calculs cryptographiques sont réalisés par les serveurs eux-mêmes.

Pour mettre en œuvre un canal de communication sécurisé, un échange de clés est prévu entre le dispositif HW et chaque serveur de sauvegarde BCKi, permettant de générer des clés de session kBi propres à chaque serveur BCKi mais connues du dispositif HW. Cet échange de clés est par exemple un échange de clés Diffie Hellman réalisé conformément aux étapes suivantes :
i) chaque serveur de sauvegarde BCKi génère une paire de clés privée peBi et publique PeBi éphémères au moyen d'un générateur de clés asymétriques, puis communique sa clé publique éphémère PeBi au dispositif HW dans un certificat éphémère CeBi qu'il a signé avec sa clé privée pBi, ainsi que son certificat CBi signé par l'autorité de confiance :
   CeBi = [PeBi, Sign(pBi, PeBi)]
   CBi = [PBi, Sign(pL, PBi)]
ii) le dispositif HW génère lui-même une paire de clés privée peD et publique PeD éphémères, puis communique sa clé publique éphémère PeD aux serveurs de sauvegarde BCKi dans un certificat éphémère CeD qu'il a signé avec sa clé privée pD, ainsi que son certificat CD signé par l'autorité de confiance, soit :
   CeD = [PeD, Sign(pD, PeD)]
   CD = [PD, Sign(pL, PD)]
iii) chaque serveur de sauvegarde BCKi vérifie la signature de la clé publique éphémère PeD du dispositif HW au moyen de la clé publique PD présente dans son certificat CD, puis vérifie la signature de la clé publique PD présente dans le certificat CD au moyen de la clé publique PL de l'autorité de certification, ou vice-versa (vérification de la signature de la clé publique PD avant vérification de la signature de la clé publique éphémère PeD),
iv) de même, le dispositif HW vérifie la signature de la clé publique éphémère PeBi de chaque serveur BCKi au moyen de la clé publique PBi présente dans le certificat CB, puis vérifie la signature de la clé publique PBi présente dans le certificat CB au moyen de la clé publique PL de l'autorité de certification, ou vice-versa,
v) chaque serveur de sauvegarde BCKi génère une clé de session éphémère kBi à partir de sa clé privée éphémère peBi et de la clé publique éphémère PeD du dispositif HW, au moyen d'une fonction d'échange de clés telle, par exemple la fonction ECDH (échange de clé Diffie Hellman basée sur les courbes elliptiques ou "Elliptic Curve Diffie-Hellman"), soit :
   kBi = ECDH(peBi, PeD)
vi) le dispositif HW génère la clé de session éphémère kBi de chaque serveur de sauvegarde BCKi à partir de sa clé privée éphémère peD et de la clé publique éphémère PeBi du serveur de sauvegarde BCKi, au moyen de la même fonction, soit :
   kBi = ECDH(peD, PeBi)

Après avoir généré les parts Si de la graine S, le dispositif HW conduit des étapes de chiffrement symétrique de chaque part Si avec la clé de session kBi commune au serveur de sauvegarde BCKi à qui la part Si doit être envoyée, qui forme donc une clé partagée. Dans un exemple simple de mise en œuvre, le dispositif HW génère trois parts S1, S2, S3 (le seuil n pouvant alors être égal à 2 ou à 3) et trois serveurs de sauvegarde BCK1, BCK2, BCK3 sont prévus. Chaque serveur BCKi génère sa propre clé de session kB1, kB2, kB3 et le dispositif HW génère de son côté chacune de ces clés de sessions après un échange de clés avec chaque serveur de la manière qui vient d'être décrite. Ensuite, le dispositif HW conduit des étapes de chiffrement symétrique des parts S1, S2, S3 au moyen de ces clés, soit :
- chiffre la part S1 avec la clé kB1, soit {S1}kB1, puis l'envoie au serveur BCK1,
- chiffre la part S2 avec la clé kB2, soit {S2}kB2, puis l'envoie au serveur BCK2,
- chiffre la part S3 avec la clé kB3, soit {S3}kB3, puis l'envoie au serveur BCK3.

Chaque serveur de sauvegarde BCKi déchiffre ensuite la part chiffrée {Si}kBi qu'il a reçu du dispositif HW, et la stocke dans sa mémoire MEM.

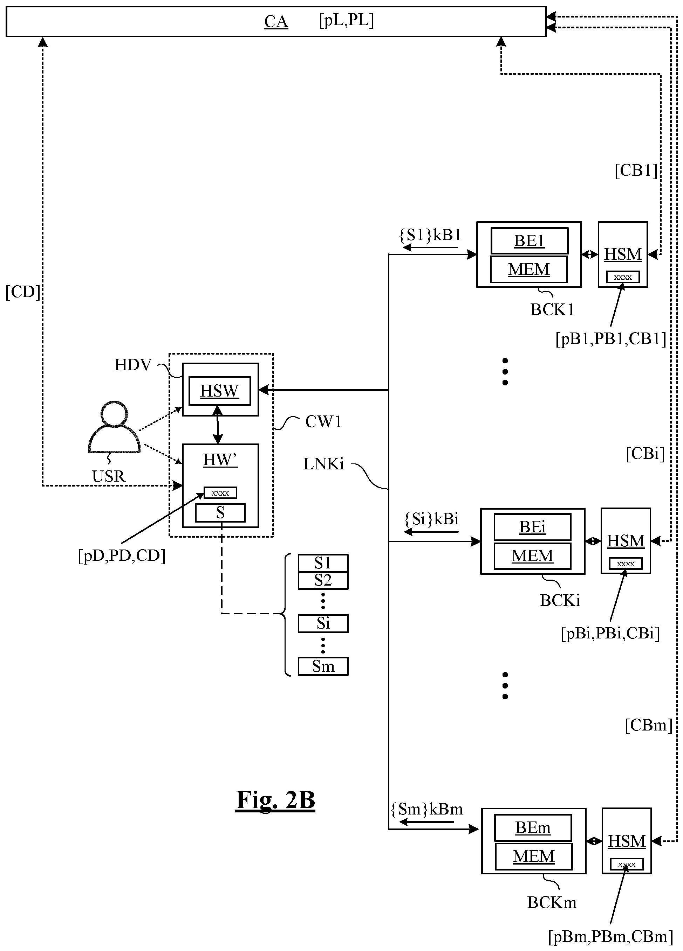

Selon le procédé, et comme illustré sur la figure 2B, la restauration de la graine S est réalisée dans un deuxième portefeuille matériel noté HW'. Il peut s'agir d'un autre dispositif que le dispositif HW si celui-ci a été perdu, volé ou détruit. Il peut aussi s'agir du dispositif HW si celui-ci a été réinitialisé, le dispositif HW étant alors considéré comme un "autre" dispositif sous l'angle du procédé, puisqu'il ne possède plus la graine.

Pour la restauration de la graine, les étapes de création de canaux sécurisés décrites ci-dessus sont répétées. De nouvelles clés de sessions kBi sont générées. Ensuite, chaque serveur chiffre la part Si qu'il détient avec la clé de session kBi, soit {Si}kBi, puis l'envoie au dispositif HW. Ce dernier déchiffre ensuite chaque part Si au moyen de la clé de session kBi correspondante, puis reconstitue la graine S au moyen de la fonction inverse de celle qui a permis de générer les parts Si, notée "SS⁻¹" :
S = SS⁻¹ (S1, S2,..., Si,..., Sm)

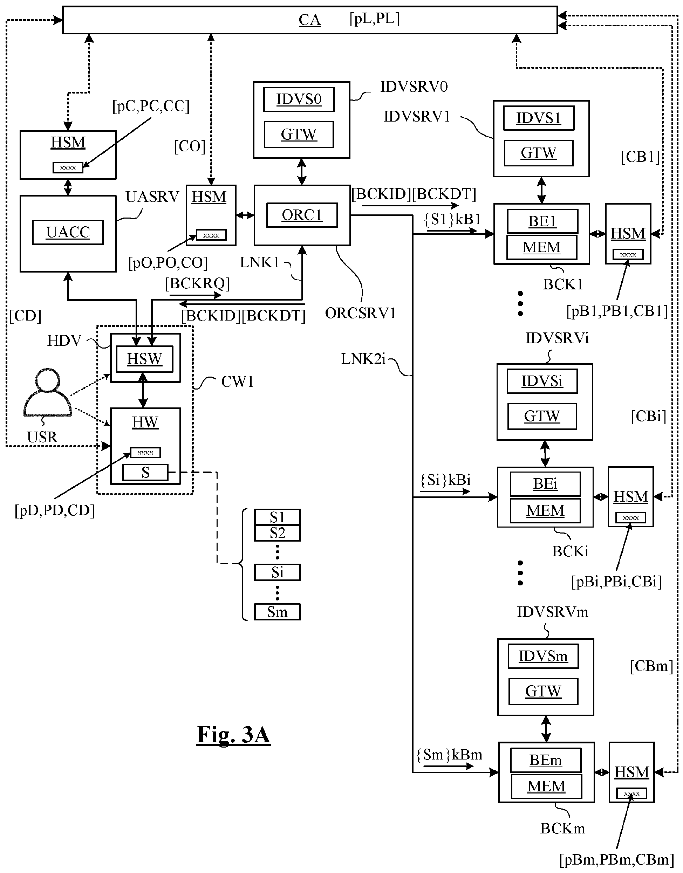

La figure 3A montre l'architecture d'un système permettant de mettre en œuvre un autre mode de réalisation du procédé de l'invention. Dans ce mode de réalisation, un serveur ORCSRV1 est interposé entre le dispositif hôte HDV et les serveurs de sauvegarde BCKi. Ce serveur, appelé à titre non limitatif "serveur orchestrateur", exécute un programme dorsal ou "back-end" ORC1 appelé dans ce qui suit "programme orchestrateur" ou "orchestrateur". Le serveur ORCSRV1 est relié à un module de sécurité HSM pourvu d'une clé privée pO, d'une clé publique PO, et d'un certificat CO (certificat statique) signé par l'autorité de certification CA :
CO = [PO, Sign(pL, PO)]

Pour la mise en œuvre du procédé, une première liaison de données LNK1 est établie entre le dispositif HW et l'orchestrateur ORC1 au moyen du dispositif hôte HDV, par exemple une liaison HTTPS. Une pluralité de liaisons de données LNK2i sont également établies entre l'orchestrateur et les serveurs de sauvegarde BCKi, par exemple des liaisons HTTPS, VPN IPsec, etc.

La liaison de données entre l'orchestrateur et le dispositif HW est sécurisée par la création d'un canal sécurisé selon la même technique que celle décrite ci-dessus :
i) l'orchestrateur ORC1 génère un paire de clés privée PeO et publique PeO puis communique sa clé publique éphémère PeO au dispositif HW dans un certificat éphémère CeO qu'il a signé avec sa clé privée pO, accompagné de son certificat CO signé par l'autorité de confiance, soit :
   CeO = [PeO, Sign(pO, PeO)]
   CO = [PO, Sign(pL, PO)]
ii) le dispositif HW génère une paire de clés privée peD et publique PeD éphémères puis communique sa clé publique éphémère PeD à l'orchestrateur dans un certificat éphémère CeD qu'il a signé avec sa clé privée pD, accompagné de son certificat CD signé par l'autorité de confiance, soit : CeD = [PeD, Sign(pD, PeD)] CD = [PD, Sign(pL, PD)]
iii) l'orchestrateur ORC1 vérifie la signature de la clé publique éphémère PeD du dispositif HW au moyen de la clé publique PD présente dans le certificat CD, puis vérifie la signature de la clé publique PD au moyen de la clé publique PL de l'autorité de certification, ou vice-versa,
iv) de même, le dispositif HW vérifie la signature de la clé publique éphémère PeO de l'orchestrateur au moyen de la clé publique PO présente dans le certificat CO, puis vérifie la signature de la clé publique PO au moyen de la clé publique PL de l'autorité de certification, ou vice-versa,
v) l'orchestrateur ORC1 génère une clé de session éphémère k0 à partir de sa clé privée éphémère peO et de la clé publique éphémère PeD du dispositif HW :
   k0 = ECDH(peO, PeD)
vi) le dispositif HW génère la clé de session éphémère k0 à partir de sa clé privée éphémère peD et de la clé publique éphémère PeO de l'orchestrateur :
   k0 = ECDH(peD, PeO)

Une fois le canal sécurisé créé entre l'orchestrateur et le dispositif HW, des données à l'attention des serveurs de sauvegarde BCKi peuvent être envoyées en toute sécurité par le dispositif HW à l'orchestrateur, grâce à un chiffrement symétrique au moyen de la clé de session partagée k0 de tout ou partie des données échangées. Réciproquement l'orchestrateur peut communiquer au dispositif HW sous une forme chiffrée au moyen de la clé k0 des données reçues des serveurs de sauvegarde BCKi.

Des canaux sécurisés sont également créés entre le dispositif HW et les serveurs de sauvegarde BCKi au moyen de clés de session kBi qui sont générées au terme d'un échange de clés par l'intermédiaire de la liaison de données LNK1, l'orchestrateur agissant comme passerelle ou "serveur proxy" entre le dispositif HW et les serveurs BCKi.

Après exécution de ces étapes, on distingue :
- à travers la liaison de données LNK1, un canal sécurisé par la clé de session k0 partagée par l'orchestrateur et le dispositif HW, qui permet de chiffrer les données échangées entre l'orchestrateur et le dispositif HW,
- à travers les liaisons de données LNK2i, des canaux sécurisés par les clés de session kBi propre à chaque serveur de sauvegarde BCKi et connues du dispositif HW, ce qui permet au dispositif HW d'échanger avec chaque serveur BCKi des données sous forme chiffrée.

Il peut par ailleurs être prévu, dans certains cas, de chiffrer avec la clé k0 des données qui sont reçues par l'orchestrateur sous une forme chiffrée par les clés kBi, ce qui correspond à un surchiffrement de ces données.

Dans un mode de réalisation, le procédé de l'invention met en œuvre deux perfectionnements concernant la transmission du certificat CD du dispositif HW dans le cadre d'un échange de clés avec un serveur quelconque. En effet l'envoi par le dispositif de son certificat CD dans le cadre d'un tel échange de clés, constitue une faille en termes de confidentialité, la clé publique PD présente dans le certificat étant exposée en cas de surveillance de la ligne. Par ailleurs, il a été démontré qu'une signature ECDSA permet de retrouver la valeur de la clé publique correspondante. Ainsi, la transmission de la signature Sign(pD, PeD) de la clé publique éphémère PeD dans le certificat éphémère CeD peut également permettre à un tiers de découvrir la clé publique PD.

Ces deux perfectionnements consistent respectivement dans le chiffrement du certificat CD et dans le chiffrement de la signature Sign(pD, PeD). A titre d'exemple, on décrira la mise en œuvre de ces procédés dans le cadre du calcul de la clé de session k0 décrite précédemment. Les étapes relatives à l'échange de clés précédemment décrites sont modifiées comme suit :
i) l'orchestrateur génère une clé privée éphémère peO, une clé publique éphémère PeO et un certificat éphémère CeO signé avec sa clé privée pO, et transfère son certificat éphémère CeO au dispositif ainsi que son certificat CO :
   CeO = [PeO, Sign(pO, PeO)]
   CO = [PO, Sign(pL, PO)]
ii) le dispositif HW génère une clé privée éphémère peD et une clé publique éphémère PeD et calcule une première signature Sign(pD, PeD) de sa clé publique éphémère PeD à partir de sa clé privé pD et au moyen de l'algorithme ECDSA,
iii) le dispositif génère la clé de session k0 à partir de sa clé privé éphémère peD et de la clé publique éphémère PeO de l'orchestrateur ,
iv) le dispositif chiffre son certificat CD avec la clé de session k0 :
   {CD}k0
v) le dispositif chiffre la première signature Sign(pD, PeD) au moyen de la clé de session k0 :
   {Sign(pD, PeD)}k0
vi) le dispositif transfère à l'orchestrateur son certificat CD chiffré avec la clé de session k0 ainsi que son certificat éphémère CeD comprenant la signature de sa clé publique éphémère PeD chiffrée avec la clé de session k0 :
   {CD}k0 ∥ CeD soit
   {CD}k0 ∥ PeD ∥ {Sign(pD, PeD)}k0
   ("||" étant le symbole de la concaténation)
vii) l'orchestrateur génère la clé de session k0 à partir de sa clé privé éphémère peO et de la clé publique éphémère PeD reçue du dispositif , et
viii) au moyen de la clé de session k0, l'orchestrateur déchiffre la signature présente dans le certificat éphémère CeD et déchiffre le certificat CD du dispositif.

Il apparaîtra clairement à l'homme de l'art que ces deux procédés de chiffrement du certificat CD et de chiffrement de la signature de la clé publique éphémère PeD peuvent être mis en œuvre séparément, la clé publique pouvant être chiffrée sans chiffrer la signature ou réciproquement. Il apparaîtra également à l'homme de l'art que ces deux procédés sont d'application universelle et peuvent être mis en œuvre lors de la création de tout canal sécurisé basé sur un échange de clés et la génération de signatures avec l'algorithme ECDSA.

De retour à la figure 3A, il ressort de ce qui précède que la prévision de l'orchestrateur ORC1 permet de réduire le nombre de liaison de données entre le dispositif HW et les serveurs de sauvegarde BCKi, ces liaisons étant remplacées par l'unique liaison de données LNK1 entre le dispositif HW et l'orchestrateur, tout en assurant un degré de sécurité supplémentaire grâce à la possibilité de surchiffrer des données transitant par la liaison LNK1, comme indiqué plus haut. Il est de plus possible de préserver la confidentialité de la clé publique PD grâce aux perfectionnements qui viennent d'être décrits. La prévision de l'orchestrateur présente divers autres avantages qui seront décrits plus loin en relation avec la mise en œuvre d'étapes de vérification de l'identité de l'utilisateur.

L'étape de sauvegarde de la graine S peut dans ce cas être mise en œuvre comme suit, en référence à la figure 3A :
i) établissement de la liaison LNK1 entre le dispositif HW et l'orchestrateur et envoi par le dispositif HW d'une requête en sauvegarde BCKRQ à l'orchestrateur,
ii) génération par l'orchestrateur d'un identifiant aléatoire BCKID de la sauvegarde, établissement des liaisons LNK2i entre l'orchestrateur et les serveurs de sauvegarde BCKi, envoi par l'orchestrateur aux serveurs de sauvegarde BCKi de l'identifiant BCKID,
iii) création du canal sécurisé entre le dispositif HW et l'orchestrateur ORC1 au moyen de la clé de session k0,
iv) création de canaux sécurisés entre le dispositif HW et les serveurs de sauvegarde BCKi au moyen des clés de session kBi, par l'intermédiaire de l'orchestrateur ORC1,
v) génération par le dispositif HW des parts Si de la graine S :
   S1, S2,..., Si,..., Sm = SS (S)
vi) chiffrement par le dispositif HW de chaque part Si au moyen de la clé de session kBi du serveur de sauvegarde BCKi à qui la part Si est destinée,
vii) envoi par le dispositif HW de l'ensemble des parts chiffrées {Si}kBi à l'orchestrateur :
   {S1}kB1∥{S2}kB2∥....∥{Si}kBi∥...∥{Sm}kBm
viii) envoi par l'orchestrateur à chaque serveur de sauvegarde BCKi de la part chiffrée {Si}kBi qui lui est destinée,
ix) déchiffrement par chaque serveur BCKi de la part Si qui lui est communiquée, et stockage dans sa mémoire en association avec l'identifiant de la sauvegarde BCKID.

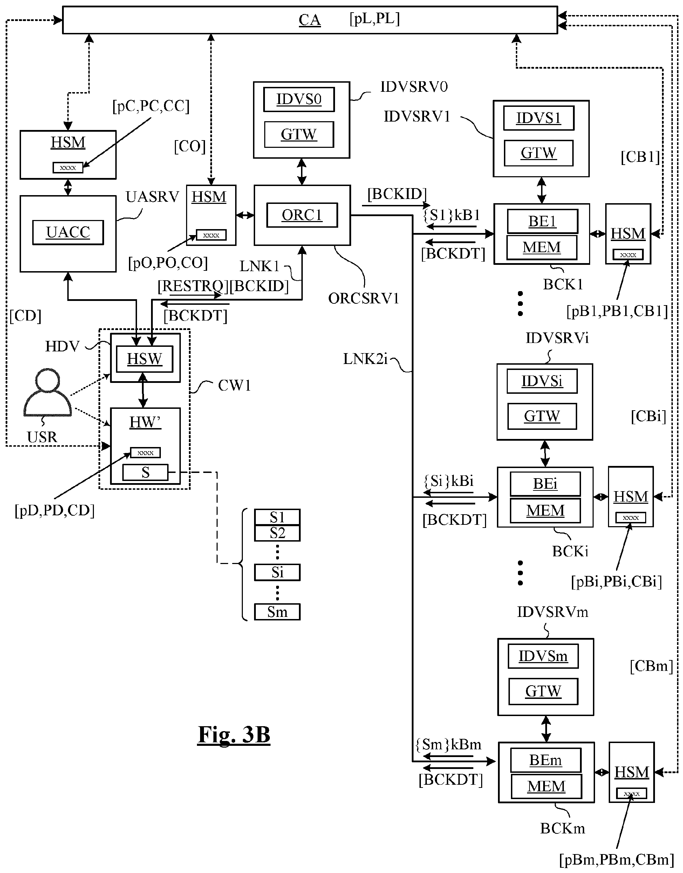

Par ailleurs, l'étape de restauration de la graine S dans un nouveau dispositif HW', illustrée sur la figure 3B, déclenchée à la demande de l'utilisateur USR, comprend les étapes suivantes, :
i) établissement de la liaison LNK1 entre le dispositif HW et l'orchestrateur et envoi par le dispositif HW d'une requête en restauration RESTRQ à l'orchestrateur, accompagnée de l'identifiant de la sauvegarde BCKID,
ii) établissement des liaisons LNKi entre l'orchestrateur et les serveurs de sauvegarde BCKi, et envoi par l'orchestrateur aux serveurs de sauvegarde BCKi de l'identifiant BCKID, pour qu'ils soient informés de la restauration à réaliser,
iii) création du canal sécurisé entre le dispositif HW et l'orchestrateur ORC1 au moyen d'une nouvelle clé de session k0,
iv) création de canaux sécurisés entre le dispositif HW et les serveurs de sauvegarde BCKi au moyen de nouvelles clés de session kBi, par l'intermédiaire de l'orchestrateur ORC1,
v) lecture par chaque serveur de sauvegarde BCKi, dans sa mémoire, au moyen de l'identifiant BCKID, de la part Si qu'il détient, et chiffrement de celle-ci au moyen de la nouvelle clé de session kBi,
vi) transmission à l'orchestrateur, par chaque serveur de sauvegarde BCKi, de la part chiffrée {Si}kBi,
vii) collecte par l'orchestrateur de toutes les parts chiffrées {Si}kBi fournies par les serveurs de sauvegarde BCKi :
   {S1}kB1, {S2}kB2,...., {Si}kBi,..., {Sm}kBm
viii) transmission au dispositif HW de chaque part chiffrée {Si}kBi, une après l'autre ou toutes ensemble :
   {S1}kB1∥{S2}kB2∥....∥{Si}kBi∥...∥{Sm}kBm
ix) déchiffrement, par le dispositif HW, de chaque part Si au moyen de la clé de session kBi du serveur de sauvegarde BCKi correspondant :
   Si = {Si}⁻¹kBi
x) reconstitution de la graine par le dispositif HW et stockage de celle-ci dans sa mémoire :
   S = SS⁻¹ (S1, S2,..., Si,..., Sm)

Il sera noté que dans un mode de réalisation l'orchestrateur peut ne collecter que n parts nécessaires à la reconstitution de la graine, si n est inférieur à m. Dans ce cas, la graine est reconstituée à partir des n parts récupérées :
S = SS⁻¹ (S1, S2,..., Si,..., Sn)

On a supposé dans ce qui précède que l'identifiant de la sauvegarde BCKID a été conservé par le logiciel compagnon HSW du dispositif hôte HDV malgré la perte du dispositif HW utilisé lors de la sauvegarde. Dans un mode de réalisation permettant de prévenir le cas où l'utilisateur aurait désinstallé définitivement le logiciel compagnon HSW, un serveur de comptes clients UASRV peut être prévu, comprenant un compte utilisateur UACC dans lequel diverses données concernant l'utilisateur sont conservées, notamment l'identifiant BCKID de la sauvegarde. Le serveur UASRV est associé à un module de sécurité HSM recevant une clé privée pC, une clé publique PC, un certificat CC signé par l'autorité de certification, et la clé publique PL de cette dernière. Dans ce cas, le dispositif HW' établit une liaison de données avec le serveur UASRV grâce à un échange de clés permettant de définir une clé de session pour la création d'un canal sécurisé, avec vérification réciproque des certificats. Une fois le canal sécurisé établi, le logiciel compagnon HSW se connecte au compte client UACC pour récupérer l'identifiant BCKID. Dans une variante, l'identifiant BCKID est stocké sur le serveur UASRV mais n'est pas communiqué au logiciel compagnon. Une liaison sécurisée est établie entre le serveur UASRV et l'orchestrateur ORC1. L'orchestrateur transfère l'identifiant BCKID au serveur UASRV au moment de la sauvegarde et réciproquement reçoit l'identifiant BCKID du serveur UASRV lorsque l'utilisateur veut restaurer sa graine.

Dans un mode de réalisation, l'identité de l'utilisateur est également associée au processus de sauvegarde, en définissant un ensemble d'informations formant une "identité pivot" permettant de l'identifier. Les informations formant l'identité pivot comprennent par exemple le prénom, le nom et la date de naissance de l'utilisateur, et optionnellement d'autres informations telles que son lieu de naissance. Ces informations sont collectées par le logiciel compagnon et sont communiquées à l'orchestrateur qui les rassemble pour former une chaîne binaire que l'on désignera "données de la sauvegarde" BCKDT. Les données BCKDT peuvent contenir d'autres informations comme la date et l'heure de la sauvegarde, et un nom donné par l'utilisateur à la sauvegarde (pour lui permettre ultérieurement de distinguer plusieurs sauvegardes, s'il détient plusieurs portefeuilles matériels).

A l'initialisation de la sauvegarde, comme montré sur la figure 3A, l'orchestrateur communique les données BCKDT aux serveurs de sauvegarde BCKi qui vont les associer, ainsi que l'identifiant BCKID, aux parts Si sauvegardées. Pour des raisons de confidentialité, il pourrait être préféré, dans certains modes de réalisation, que l'orchestrateur ne conserve pas les données BCKDT une fois la sauvegarde réalisée. Les données BCKDT sont dans ce cas uniquement conservées par les serveurs BCKi, qui les communiquent à l'utilisateur USR pour confirmation par ce dernier de son identité au moment de la restauration, comme montré sur la figure 3B.

Dans un mode de réalisation du procédé, l'identité pivot de l'utilisateur est vérifiée au cours d'au moins une étape de vérification d'identité désignée "IDV" ("Identity Vérification") qui est conduite avant la restauration de la graine. Dans un mode de réalisation, plusieurs étapes de vérification d'identité IDVi sont de préférence prévues avant de procéder à la restauration de la graine, ces étapes étant conduites par tout ou partie des serveurs de sauvegarde BCKi sollicités pour la restitution d'une part Si de la graine S.

Dans un mode de réalisation montré sur la figure 3B, ces étapes de vérification d'identité sont confiées à des prestataires spécialisés au lieu d'être réalisées par les serveurs de sauvegarde BCKi eux-mêmes. De tels prestataires possèdent des serveurs IDVSRVi exécutant chacun un service de vérification d'identité automatisé IDVSi accessible via une passerelle GTW ("Gateway"). Chaque serveur de sauvegarde BCKi peut se voir attribuer un serveur IDVSRVi différent, et être configuré pour se relier à la passerelle GTW du service IDVSi exécuté par ce serveur. De préférence, de tels services IDVSi ne sont pas entièrement automatisés, au moins pour une partie d'entre eux, et incluent une intervention humaine notamment en cas de doute sur l'identité d'une personne.

Ainsi, chaque serveur de sauvegarde BCKi ou au moins une partie d'entre eux, est configuré pour réaliser une étape IDVi de vérification de l'identité pivot de l'utilisateur lorsqu'il reçoit une demande de restitution d'une part de la graine. Le serveur est alors de préférence configuré pour refuser de restituer la part si cette vérification n'est pas concluante.

Dans un mode de réalisation, l'étape de sauvegarde de la graine est également précédée d'une étape initiale IDV0, conduite par l'orchestrateur ou supervisée par celui-ci, de vérification de l'identité pivot de l'utilisateur (soit au moins son prénom, son nom et sa date de naissance). Dans ce cas, un serveur IDVSRVO est également associé à l'orchestrateur ORC1, et l'orchestrateur est configuré pour se relier à une passerelle GTW d'un service IDVSO exécuté par ce serveur pour la réalisation de l'étape IDVO.

Au cours de l'étape optionnelle IDVO précédant la sauvegarde ou de chacune des étapes IDVi intervenant avant la restitution des parts de la graine, l'orchestrateur met l'utilisateur USR en relation avec le service IDVSO ou IDVSi approprié, via la passerelle GTW appropriée. L'utilisateur doit réaliser certaines actions qui lui sont demandées par l'intermédiaire de l'écran du dispositif hôte HDV et la caméra dont il est équipé (par exemple une caméra de téléphone mobile, une webcam d'ordinateur personnel, etc.). A titre d'exemple, le service IDVSO ou IDVSi lui demande de présenter une pièce d'identité valide comprenant une photo de sa personne, de prendre une photo de la pièce d'identité avec sa caméra et de la lui envoyer Le service IDVSO ou IDVSi lui demande ensuite de prendre une photo (selfie) ou une vidéo de son visage et de l'envoyer. Le service IDVSO ou IDVSi vérifie ensuite l'authenticité de la pièce d'identité à partir de la photo ou de la vidéo de son visage, et la pièce d'identité, une fois vérifiée, lui permet de vérifier les données de l'identité pivot avec un degré de certitude qui peut, dans certains modes de réalisation, donner lieu à un score. Le résultat de cette vérification, et optionnellement le score, est communiqué à l'orchestrateur. Dans un mode de réalisation, les étapes d'IDV peuvent également inclure des vérifications sur des bases gouvernementales.

Bien que l'étape IDVO ne soit pas aussi critique que celles réalisées par les serveurs BCKi au moment de la restitution des parts Si, elle permet de s'assurer que l'utilisateur n'a pas fait d'erreur en fournissant les informations relatives à son identité, qui sont incorporées dans les données BCKDT. Par ailleurs, les informations collectées par l'orchestrateur au cours de cette étape, telle que la photo de sa pièce d'identité et la photo ou la vidéo de son visage, peuvent optionnellement être communiquées aux serveurs de sauvegarde BCKi par un canal de communication spécifique, puisque ces informations ne font pas partie des données de la sauvegarde BCKDT.

Dans un mode de réalisation, l'orchestrateur ORC1 peut suspendre le processus de sauvegarde de la graine s'il estime que la vérification initiale de l'identité de l'utilisateur n'est pas concluante ou se voit attribuer un score trop faible. Par ailleurs, dans un autre mode de réalisation ou en complément, l'orchestrateur reçoit des serveurs de sauvegarde BCKi des informations sur le succès des étapes de vérification d'identité IDVi qu'ils ont conduites ou qui ont été conduites par les prestataires auxquels ils sont affiliés. Si un nombre déterminé de serveurs BCKi n'a pas vérifié avec succès l'identité de l'utilisateur et refuse de restituer les parts Si qu'ils détiennent, l'orchestrateur peut être configuré pour suspendre la restitution des parts Si par les serveurs qui ont vérifié avec succès l'identité de l'utilisateur. L'orchestrateur peut optionnellement décider de soumettre l'utilisateur à une étape supplémentaire de vérification de son identité.

Dans une variante, ou en complément, l'orchestrateur reçoit de chaque serveur de sauvegarde BCKi ayant conduit une étape de vérification d'identité, un score de certitude quant à l'identité de l'utilisateur. Si la moyenne des scores est inférieure à un premier seuil, et/ou si l'un des scores est inférieur à un deuxième seuil, l'orchestrateur suspend le processus de restauration et optionnellement soumet l'utilisateur à une étape supplémentaire de vérification de son identité.

Dans le cas, ultime, où l'utilisateur aurait fermé son compte sur le serveur de compte UASRV, aurait désinstallé le logiciel compagnon en effaçant les données qu'il comportait, et aurait perdu son portefeuille matériel HW et ne pourrait donc plus récupérer l'identifiant de la sauvegarde BCKID, une solution peut être prévue pour lui permettre de récupérer sa graine. L'utilisateur devra alors se soumettre à une pluralité d'étapes individuelles de vérification de son identité auprès de chaque serveur BCKi pour récupérer chaque part Si de la graine. Une procédure faisant intervenir un officier ministériel, tel un notaire, peut également être prévue. Chaque prestataire d'IDV pourra également vérifier que sa démarche est légitime en s'assurant qu'il n'existe aucun compte attaché à cet utilisateur dans le serveur de comptes du système, et confier à des personnes physiques des procédures d'investigation plus approfondies, telles que la conduite d'un entretien téléphonique avec l'utilisateur, la conduite d'une vidéo conférence avec l'utilisateur, la conduite d'un entretien en face à face avec l'utilisateur, la validation d'un parcours scolaire ou d'un parcours d'employé de l'utilisateur, etc.

Il apparaîtra clairement à l'homme de l'art que le procédé de l'invention est susceptible de divers autres modes de réalisation et variantes. Notamment, les données de la sauvegarde BCKID pourraient, dans un mode de réalisation, inclure sous une forme compressée les données recueillies à l'étape IDVO pour vérifier l'identité pivot de l'utilisateur, telle que la photo ou la vidéo de son visage et une photo d'une pièce d'identité. Les étapes automatisées de vérification de l'identité pivot de l'utilisateur telles que conduites par des services IDVSi exécutés par des serveurs IDVSRVi ou par les serveurs de sauvegarde BCKi eux-mêmes, peuvent comprendre au moins deux des étapes suivantes : acquisition, par l'intermédiaire d'une caméra, d'une photo d'une pièce d'identité non périmée comprenant une photo de l'utilisateur ; acquisition, par l'intermédiaire d'une caméra, d'une ou de plusieurs photos du visage de l'utilisateur ; acquisition, par l'intermédiaire d'une caméra, d'un enregistrement vidéo montrant le visage de l'utilisateur en mouvement, avec détection du vivant pour vérifier que l'utilisateur est réel ; acquisition d'une justification de domicile, telle une facture d'électricité, de téléphone ; acquisition d'une empreinte digitale de l'utilisateur ; acquisition d'un code de validation reçu par l'utilisateur dans un message téléphonique, par email ou par courrier ; activation par l'utilisateur d'un lien reçu par l'utilisateur dans un message téléphonique, par email ou par courrier, et acquisition d'un hologramme présent sur une pièce d'identité non périmée.

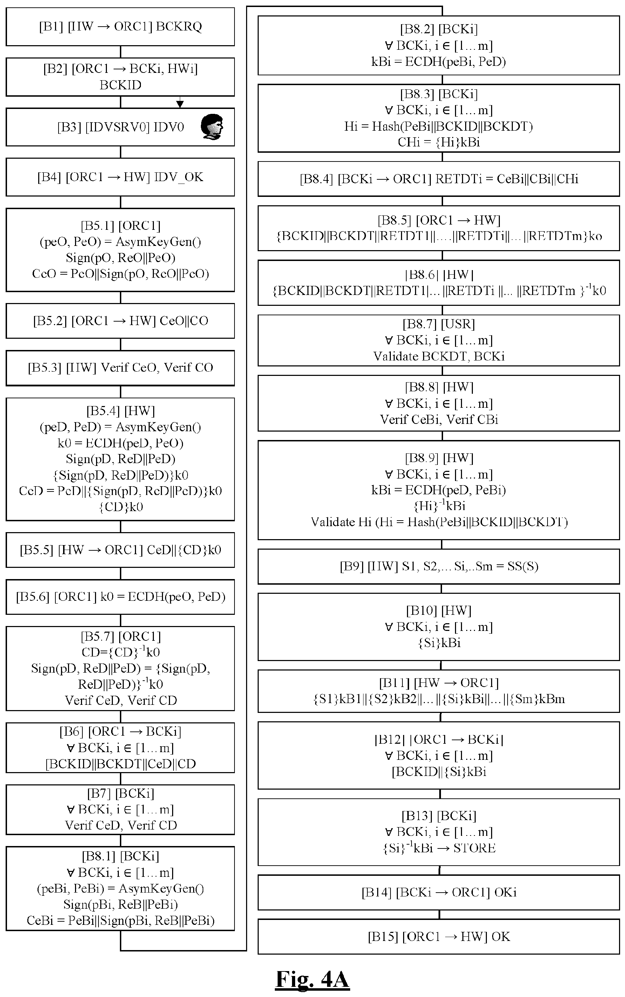

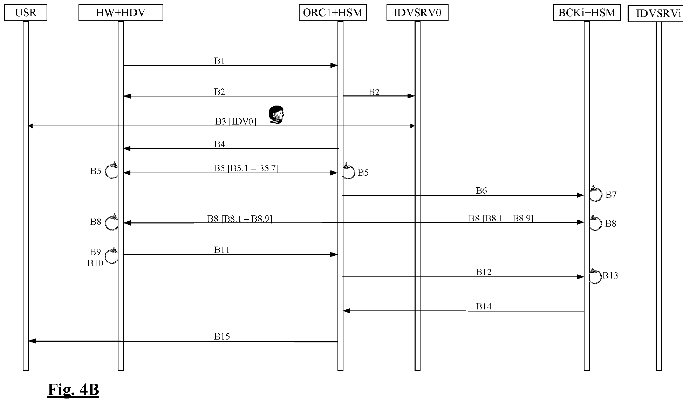

On décrira maintenant en relation avec la figure 4A un exemple d'algorithme de sauvegarde de la graine applicable au système de la figure 3A et mettant en œuvre divers aspects des modes de réalisation du procédé précédemment décrits. La figure 4B est un diagramme de séquences qui représente les étapes de l'algorithme sous forme d'interactions entre :
- l'utilisateur USR,
- le dispositif HW et son dispositif hôte HDV (considérés comme une seule et même entité formant le portefeuille de cryptoactifs CW1),
- l'orchestrateur ORC1 et le module de sécurité HSM qui lui est associé (considérés également comme une seule et même entité), et
- le serveur IDVSRVO associé à l'orchestrateur pour réaliser l'étape IDVO de vérification de l'identité de l'utilisateur,
- les serveurs de sauvegarde BCKi, et
- les serveurs IDVSRVi associés aux serveurs BCKi pour réaliser les étapes de vérification d'identité ultérieures, au moment de la restauration de la graine.

Certaines fonctions utilisées dans l'algorithme sont indiquées dans le tableau 1 ci-après, à titre d'exemple non limitatif :

**[Tab 1]**

| | |
|---|---|
| Type de cryptographie | Cryptographie à courbes elliptiques |
| Sign | Signature de type ECDSA ("Elliptic Curve Digital Signature Algorithm") avec la courbe elliptique secp256k1 |
| ECDH | Échange de clés Diffie-Hellman basé sur les courbes elliptiques utilisant par exemple la courbe elliptique secp256k1 |
| Fonction de hachage | SHA-256 ("Secure Hash Algorithm") |
| Chiffrement symétrique {.}k0 | Algorithme AEAD-AES-SIV-CMAC-256 |
| Fonction SS | Fonction de Partage de secret de Shamir ou autre fonction similaire, ou Partage de secret vérifiable publiquement de Pedersen PVSS basé sur la courbe secp384r1 |

Description de l'algorithme, en relation avec les figures 4A et 4B.

### B1. Initialisation de la sauvegarde

L'utilisateur USR sélectionne dans le dispositif HW une option de sauvegarde de la graine. L'utilisateur, par l'intermédiaire du dispositif hôte HDV, crée un compte de sauvegarde sur le serveur de compte UASRV. Le dispositif HW établit une liaison de données avec l'orchestrateur ORC1 et lui envoie la requête en sauvegarde :
[HW → ORC1]
BCKRQ

Optionnellement le dispositif HW offre la possibilité à l'utilisateur de choisir le nombre m de parts Si qu'il souhaite générer pour la sauvegarde de la graine, et le seuil n correspondant au nombre de parts nécessaires à la reconstitution de la graine S. Toujours de manière optionnelle, le dispositif HW peut présenter à l'utilisateur une liste de serveurs de sauvegarde BCKi, certains pouvant être des partenaires externes, et demander à l'utilisateur d'indiquer ceux qu'il souhaite utiliser. Sinon, ceux-ci sont sélectionnés automatiquement par l'orchestrateur. L'orchestrateur ORC1 établit une liaison de données avec les serveurs BCKi, puis engage le processus de sauvegarde selon les étapes décrites dans ce qui suit.

### B2. Génération et envoi au dispositif HW et aux serveurs BCKi de l'identifiant de la sauvegarde

[ORC1 → BCKi, HW] BCKID

L'orchestrateur ORC1 génère l'identifiant BCKID de la sauvegarde, par exemple un nombre aléatoire, et le transfère au dispositif HW et aux serveurs BCKi.

### B3. Réalisation d'une vérification d'identité IDVO par le serveur IDVSRVO

[IDVSRV0] IDVO

L'orchestrateur ORC1 connecte l'utilisateur au serveur IDVSRVO à travers une passerelle GTW. Le service IDVSO procède à une vérification de l'identité pivot de l'utilisateur IDVO.

### B4. Confirmation par l'orchestrateur du succès de la vérification d'identité

IDV_OK → HW

Le serveur IDVSRV0 confirme à l'orchestrateur ORC1 que l'IDV a été réalisée avec succès, et l'orchestrateur ORC1 confirme à l'utilisateur par l'intermédiaire du dispositif HW que son identité a été vérifiée et que l'étape de sauvegarde de la graine peut être initiée. A l'occasion de cette étape l'orchestrateur ORC1 peut générer les données de la sauvegarde BCKDT, et les envoyer au dispositif HW.

### B5. Authentification mutuelle et création d'un canal sécurisé entre l'orchestrateur et le dispositif

### B5.1 Génération par l'orchestrateur d'un certificat éphémère

(peO, PeO) = AsymKeyGen()
Sign(pO, ReO∥PeO)
CeO = PeO∥Sign(pO, ReO∥PeO)

L'orchestrateur ORC1 génère une clé privée éphémère peO et une clé publique éphémère PeO. L'orchestrateur calcule la signature de sa clé publique éphémère PeO au moyen de sa clé privée pO. Dans une variante retenue ici, l'orchestrateur calcule la signature de sa clé publique éphémère PeO après avoir concaténée celle-ci avec une donnée ReO. La donnée ReO spécifie par exemple le rôle que joue le serveur orchestrateur dans le processus, par exemple le rôle d'orchestrateur pour l'établissement d'un canal sécurisé. L'orchestrateur génère ensuite un certificat éphémère CeO par concaténation de la clé publique éphémère PeO et de la signature.

### B5.2 Envoi au dispositif des certificats de l'orchestrateur

CeO∥CO → HW

L'orchestrateur ORC1 envoie au dispositif HW son certificat éphémère et son certificat CO.

### B5.3. Vérification par le dispositif des certificats de l'orchestrateur

Verif CeO, Verif CO

Le dispositif HW vérifie la chaîne de certificats de l'orchestrateur, de la manière décrite plus haut, au moyen de la clé publique PL de l'autorité de certification.

### B5.4. Génération par le dispositif HW d'une clé de session k0 et d'un certificat éphémère

(peD, PeD) = AsymKeyGen()
k0 = ECDH(peD, PeO)
Sign(pD, ReD∥PeD)
{Sign(pD, ReD∥PeD)}k0
CeD = PeD∥{Sign(pD, ReD∥PeD)}k0
{CD}k0

Le dispositif HW génère une clé privée éphémère peD et une clé publique éphémère PeD, puis une clé de session k0 à partir de sa clé privée éphémère peD et de la clé publique éphémère PeO de l'orchestrateur au moyen de l'algorithme ECDH. Le dispositif HW calcule ensuite la signature de sa clé publique éphémère PeD au moyen de sa clé privée pD, ici après avoir concaténé la clé publique éphémère PeD avec une donnée ReD. La donnée ReD spécifie par exemple le rôle que joue HW dans le processus. Le dispositif HW chiffre ensuite la signature de sa clé publique éphémère avec la clé de session k0, conformément au procédé de chiffrement de la signature décrit plus haut. Le dispositif HW forme ensuite un certificat éphémère CeD par concaténation de la clé publique éphémère PeD et de la signature chiffrée. Enfin, le dispositif HW chiffre son certificat CD au moyen de la clé k0, conformément au procédé de chiffrement du certificat décrit plus haut.

### B5.5. Envoi à l'orchestrateur des certificats du dispositif

[HW → ORC1]
CeD∥{CD}k0

Le dispositif HW envoie à l'orchestrateur ORC1 son certificat CD chiffré au moyen de la clé k0 ainsi que son certificat éphémère CeD comprenant la signature chiffrée. Grâce au chiffrement du certificat et au chiffrement de la signature du certificat éphémère, la clé publique PD n'est pas exposée, comme expliqué plus haut. Comme indiqué plus haut, l'ordre de ces étapes peut être inversé, le dispositif pouvant envoyer son certificat, ici chiffré, avant d'envoyer son certificat éphémère, comprenant ici la signature chiffrée.

### B5.6. Génération par l'orchestrateur de la clé de session k0

k0 = ECDH(peO, PeD)

L'orchestrateur ORC1 génère la clé de session k0 à partir de sa clé privée éphémère peO et de la clé publique éphémère PeD du dispositif HW au moyen de l'algorithme ECDH.

### B5.7. Vérification par l'orchestrateur des certificats du dispositif

CD={CD}⁻¹k0
Sign(pD, ReD∥PeD) = {Sign(pD, ReD∥PeD)}⁻¹k0
Verif CeD, Verif CD

L'orchestrateur ORC1 déchiffre le certificat CD du dispositif HW ainsi que la signature du certificat éphémère du dispositif HW, puis vérifie la chaîne de certificats.

### B6. Envoi aux serveurs BCKi des données BCKID, BCKDT et des certificats CeD, CD du dispositif

[ORC1 → BCKi]
Pour chaque serveur BCKi, i allant de 1 à m
BCKID∥BCKDT∥CeD∥CD

L'orchestrateur ORC1 envoie à chaque serveur BCKi l'identifiant de la sauvegarde BCKID, les données de la sauvegarde BCKDT qui incluent au moins les données de l'identité pivot. Comme indiqué plus haut, d'autres données peuvent optionnellement être envoyées ou avoir été envoyées aux serveurs de sauvegarde par d'autres canaux, comme la photo ou vidéo du visage de l'utilisateur prise à l'étape IDVO, et la photo d'un document d'identité. Si ces données ne sont pas incluses dans les données de la sauvegarde BCKDT, elles pourront être stockées par le serveur de comptes clients et transmises aux serveurs BCKi après la sauvegarde.

### B7. Vérification par chaque serveur BCKi des certificats du dispositif

Pour chaque serveur BCKi, i allant de 1 à m
Verif CeD, Verif CD

Chaque serveur BCKi vérifie la chaîne de certificats du dispositif HW de la manière précédemment décrite.

### B8. Authentification mutuelle et création d'un canal sécurisé entre les serveurs BCKi et le dispositif, par l'intermédiaire de l'orchestrateur

### B8.1 Génération par chaque serveur BCKi d'un certificat éphémère

Pour chaque serveur BCKi, i allant de 1 à m
(peBi, PeBi) = AsymKeyGen()
Sign(pBi, ReB∥PeBi)
CeBi = PeBi∥Sign(pBi, ReB∥PeBi)

Chaque serveur BCKi génère une clé privée éphémère peBi et une clé publique éphémère PeBi. Chaque serveur BCKi calcule la signature de sa clé publique éphémère PeBi après l'avoir concaténée avec une donnée ReB au moyen de sa clé privée pBi. ReB spécifie par exemple le rôle que joue chaque serveur dans le processus, par exemple le rôle de serveur de sauvegarde pour la gestion du canal sécurisé. Ensuite chaque serveur BCKi génère un certificat éphémère CeBi par concaténation de la clé publique éphémère PeBi et de sa signature.

### B8.2 Génération par chaque serveur BCKi d'une clé de session kBi

Pour chaque serveur BCKi, i allant de 1 à m
kBi = ECDH(peBi, PeD)

Chaque serveur BCKi génère ensuite une clé de session kBi à partir de sa clé privée éphémère peBi et de la clé publique éphémère PeD du dispositif HW, au moyen de l'algorithme ECDH.

### B8.3 Génération par chaque serveur BCKi d'un code de hachage chiffré

Pour chaque serveur BCKi, i allant de 1 à m
Hi = Hash(PeBi∥BCKID∥BCKDT)
CHi = {Hi}kBi

Chaque serveur BCKi génère ensuite un code de hachage Hi à partir d'une chaîne binaire comprenant sa clé publique éphémère PeBi, les données BCKID et les données de la sauvegarde BCKDT. Chaque serveur BCKi chiffre ensuite le code Hi au moyen de la clé de session kBi pour obtenir un code de hachage chiffré CHi.

### B8.4 Envoi à l'orchestrateur des certificats des serveurs BCKi et du code de hachage chiffré

[BCKi → ORC1]
RETDTi = CeBi∥CBi∥CHi

Chaque serveur BCKi envoie à l'orchestrateur ORC1 une chaîne binaire RETDTi comprenant son certificat éphémère CeBi, son certificat CBi et le code de hachage chiffré CHi.

### B8.5 Envoi au dispositif des certificats des serveurs BCKi et du code de hachage chiffré

[ORC1 → HW]
{BCKI D∥BCKDT∥RETDT1∥....∥RETDTi∥...∥RETDTm}ko

L'orchestrateur ORC1 renvoie au dispositif les données BCKID, BCKDT et toutes les données RETDTi reçues des serveurs de sauvegarde BCKi, sous une forme chiffrée au moyen de la clé k0. Il sera noté ici que l'orchestrateur n'a pas accès aux données RETDTi car il ne connaît pas les clés privées kBi des serveurs BCKi. Les données dans le canal sécurisé de communication entre l'orchestrateur et le dispositif sont donc chiffrées deux fois.

### B8.6 Déchiffrement par le dispositif des certificats des serveurs BCKi et du code de hachage chiffré

{BCKID∥BCKDT∥RETDT1|...∥RETDTi∥...∥RETDTm }⁻¹k0

Le dispositif HW déchiffre la chaîne de données pour en extraire les données BCKID, BCKDT et les certificats CeBi, CBi, CHi.

### B8.7 Validation des données BCKDT et des serveurs BCKi par l'utilisateur

Pour chaque serveur BCKi, i allant de 1 à m
Validate BCKDT, BCKi

L'utilisateur personne physique valide les données de la sauvegarde BCKDT et les serveurs BCKi en charge de la sauvegarde, qui lui sont présentées sur l'écran du dispositif hôte.

### B8.8 Vérification par le dispositif des certificats des serveurs BCKi

Pour chaque serveur BCKi, i allant de 1 à m
Verif CeBi, Verif CBi

### Le dispositif HW vérifie la chaîne de certificats de chaque serveur BCKi.

### B8.9 Génération par le dispositif des clés de session kBi et vérification des codes de hachage chiffrés

Pour chaque serveur BCKi, i allant de 1 à m
kBi = ECDH(peD, PeBi)
{Hi}⁻¹kBi
Validate Hi

Pour chaque serveur BCKi, le dispositif HW génère la clé de session kBi puis déchiffre le code Hi et le valide en recalculant lui-même le code Hi et en le comparant au code déchiffré.

### B9. Préparation de la sauvegarde, génération des m parts Si

S1, S2,...Si,..Sm = SS(S)

Au moyen de la fonction SS de partage de secret, le dispositif HW génère les m parts Si à sauvegarder dans les différents serveurs BCK1, BCK2... BCKm, avec un seuil de n parts pour récupérer la graine S.

### B10. Chiffrement des parts Si par le dispositif

Pour chaque serveur BCKi, i allant de 1 à m
{Si}kBi

Pour chaque serveur BCKi, le dispositif HW chiffre la part Si qui lui est destinée avec la clé kBi qui lui est propre.

### B11. Envoi à l'orchestrateur des parts Si chiffrées

[HW → ORC1]
{S1}kB1∥{S2}kB2∥....∥{Si}kBi∥...∥{Sm}kBm → ORC1

Le dispositif HW envoie ensuite l'ensemble des parts à l'orchestrateur ORC1. Il sera noté que l'orchestrateur n'a pas connaissance de la valeur de chaque part Si car celle-ci est chiffrée avec la clé kBi qu'il ne connaît pas.

### B12. Envoi aux serveurs BCKi des parts Si chiffrées

[ORC1 → BCKi]
Pour chaque serveur BCKi, i allant de 1 à m
BCKID∥{Si}kBi → BCKi

L'orchestrateur ORC1 envoie à chaque serveur BCKi la part Si chiffrée qui lui est destinée, accompagnée de l'identifiant de la sauvegarde.

### B13. Déchiffrement et enregistrement par chaque serveur BCKi de la part Si chiffrée

Pour chaque serveur BCKi, i allant de 1 à m
{Si}⁻¹kBi → STORE

Chaque serveur BCKi déchiffre la part Si qu'il a reçue et la stocke dans sa mémoire MEM pour qu'elle soit sauvegardée.

### B14. Confirmation de la sauvegarde à l'orchestrateur par chaque serveur BCKi

[BCKi → ORC1] OKi

Chaque serveur BCKi confirme à l'orchestrateur ORC1 par un message "OKi" (i allant de 1 à m) qu'il a déchiffré et stocké la part de la graine qui lui a été confiée. Optionnellement, chaque serveur BCKi peut envoyer une preuve chiffrée du déchiffrement de la part Si à l'aide d'un code de hachage signé avec sa clé de session. Ce code de hachage signé sera répercuté au dispositif HW pour être vérifié.

### B15. Confirmation de la sauvegarde à l'utilisateur

[ORC1 → HW]
OK

L'orchestrateur ORC1 renvoie un message de réussite ("OK") de la sauvegarde au dispositif HW, lequel affiche sur son écran à l'attention de l'utilisateur un message de confirmation de sauvegarde.

A la fin du processus :
- le dispositif HW détient toujours la graine S,
- le logiciel compagnon HSW enregistre l'identifiant de la sauvegarde BCKID,
- l'orchestrateur ORC1 ne détient pas la graine S ni les données de la sauvegarde BCKDT, et détient seulement l'identifiant de la sauvegarde BCKID,
- chaque serveur BCKi détient l'identifiant de la sauvegarde BCKID, les données de la sauvegarde BCKDT qui contiennent au moins l'identité pivot de l'utilisateur, et la part Si de la graine qui lui a été confiée.

Le logiciel compagnon HSW enregistre l'identifiant de la sauvegarde BCKID et peut aussi mettre à jour le compte client UACC de l'utilisateur en y enregistrant l'identifiant de la sauvegarde BCKID.

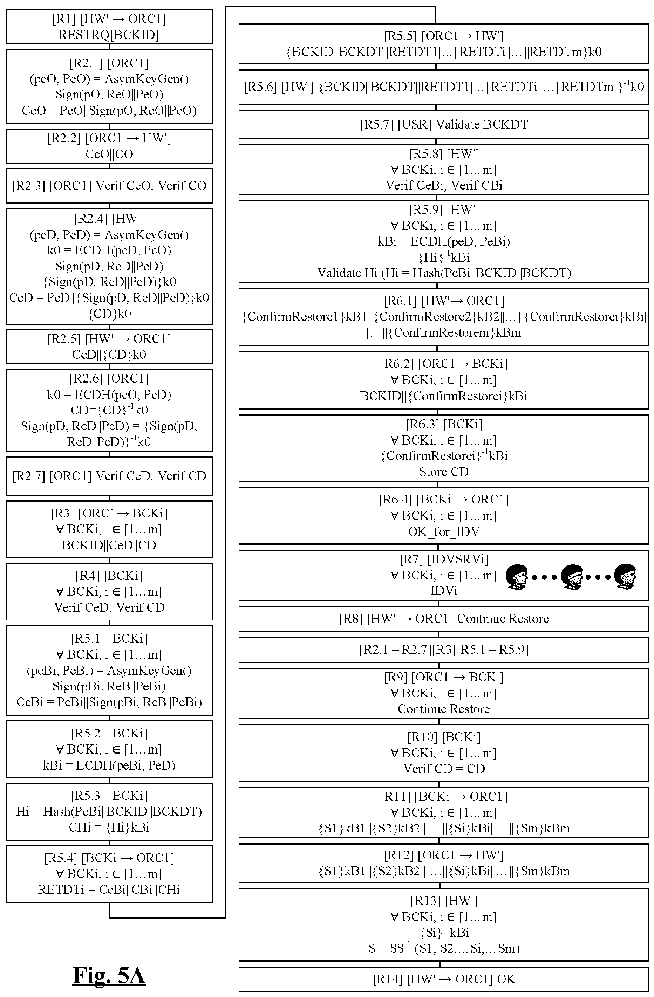

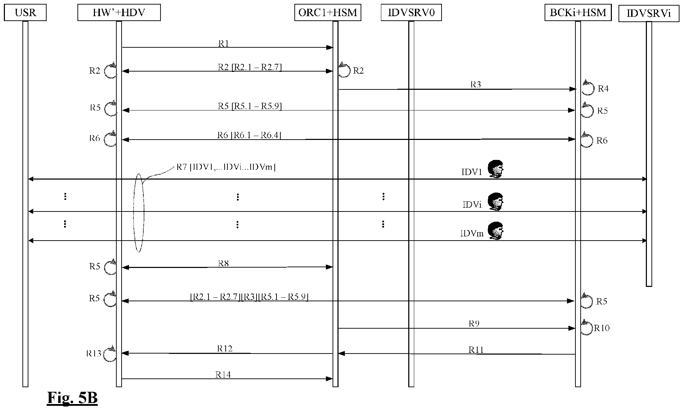

On décrira maintenant en relation avec la figure 5A un exemple d'algorithme de restauration de la graine applicable au système de la figure 3A et mettant en œuvre divers aspects des modes de réalisation du procédé précédemment décrits. La figure 5B est un diagramme de séquences qui représente les étapes de l'algorithme sous forme d'interactions entre les entités précédemment citées.

On considère ici que l'utilisateur a perdu son dispositif HW, ou a perdu de manière irrécupérable le mot de passe qui permet de l'utiliser. Il se procure un nouveau dispositif HW qu'il va utiliser pour récupérer la graine S, et le connecte au dispositif hôte HDV dont le logiciel compagnon HSW a mémorisé l'identifiant de la sauvegarde BCKID. Le nouveau dispositif HW' pourrait aussi être le dispositif HW qui a été réinitialisé.

Au commencement du processus le dispositif HW détient une clé privée pD, une clé publique PD, un certificat CD certifié par l'autorité de certification et la clé publique PL de l'autorité de certification (la même désignation que précédemment sera utilisée pour les clés et certificats du dispositif HW). L'étape de restauration comprend les étapes décrites ci-après. Les étapes semblables à celles précédemment décrites ne seront pas de nouveau commentées.

### R1. Envoi par le dispositif d'une requête de restauration à l'orchestrateur

HW' → ORC1
RESTRQ[BCKID]

La restauration est initiée par l'envoi par le dispositif HW à l'orchestrateur d'une requête en restauration RESTRQ. La requête contient l'identifiant de la sauvegarde BCKID. Elle est émise à la demande de l'utilisateur et sélectionnée à travers un menu affiché sur l'écran du dispositif HW ou sur l'écran du dispositif hôte HDV.

### R2. Authentification mutuelle et création d'un canal sécurisé entre l'orchestrateur et le dispositif

### R2.1 Génération par l'orchestrateur d'un certificat éphémère

(peO, PeO) = AsymKeyGen()
Sign(pO, ReO∥PeO)
CeO = PeO∥Sign(pO, ReO∥PeO )

### R2.2 Envoi au dispositif des certificats de l'orchestrateur

ORC1 → HW
CeO∥CO

### R2.3. Vérification par le dispositif des certificats de l'orchestrateur

Verif CeO, Verif CO

### R2.4. Génération par le dispositif d'une clé de session et d'un certificat éphémère chiffré

(peD, PeD) = AsymKeyGen()
k0 = ECDH(peD, PeO)
Sign(pD, ReD∥PeD)
{Sign(pD, ReD∥PeD)}k0
CeD = PeD∥{Sign(pD, ReD∥PeD)}k0
{CD}k0

### R2.5. Envoi à l'orchestrateur des certificats du dispositif HW

[HW → ORC1]
CeD∥{CD}k0

### R2.6. Génération par l'orchestrateur de la clé de session k0

k0 = ECDH(peO, PeD)
CD={CD}⁻¹k0
Sign(pD, ReD∥PeD) = {Sign(pD, ReD∥PeD)}⁻¹k0

### R2.7. Vérification par l'orchestrateur des certificats du dispositif

Verif CeD, Verif CD

### R3. Envoi aux serveurs BCKi des données BCKID et certificats CeD, CD

[ORC1 → BCKi]
Pour chaque serveur BCKi, i allant de 1 à m
BCKID∥CeD∥CD → BCKi

L'orchestrateur ORC1 envoie à chaque serveur de sauvegarde BCKi l'identifiant de la sauvegarde BCKID, le certificat éphémère CeD et le certificat CD du dispositif HW.

### R4. Vérification par chaque serveur BCKi des certificats du dispositif

Pour chaque serveur BCKi, i allant de 1 à m
Verif CeD, Verif CD

### R5. Authentification mutuelle et création d'un canal sécurisé entre les serveurs BCKi et le dispositif, par l'intermédiaire de l'orchestrateur

### R5.1 Génération par chaque serveur BCKi d'un certificat éphémère

Pour chaque serveur BCKi, i allant de 1 à m
(peBi, PeBi) = AsymKeyGen()
Sign(pBi, ReB∥PeBi)
CeBi = PeBi∥Sign(pBi, ReB∥PeBi)

### R5.2 Génération par chaque serveur BCKi d'une clé de session

Pour chaque serveur BCKi, i allant de 1 à m
kBi = ECDH(peBi, PeD)

### R5.3 Génération par chaque serveur BCKi d'un code de hachage chiffré

Hi = Hash(PeBi∥BCKID∥BCKDT)
CHi = {Hi}kBi

### R5.4 Envoi à l'orchestrateur par chaque serveur BCKi de son certificat et du code de hachage chiffré

[BCKi → ORC1]
Pour chaque serveur BCKi, i allant de 1 à m
RETDTi = CeBi∥CBi∥CHi

### R5.5 Envoi au dispositif des données reçues des serveurs BCKi

[ORC1 → HW]
{BCKID∥BCKDT∥RETDT1|...∥RETDTi∥...∥RETDTm}k0

### R5.6 Déchiffrement par le dispositif de la chaine de données reçue de l'orchestrateur

{BCKID∥BCKDT∥RETDT1|...∥RETDTi∥...||RETDTm}⁻¹k0

### R5.7 Validation des données de la sauvegarde par l'utilisateur

### Validate BCKDT

L'utilisateur valide les données de la sauvegarde BCKDT, notamment prénom, nom de famille, date de naissance, optionnellement lieu de naissance.

### R5.8 Vérification par le dispositif des certificats des serveurs BCKi

Pour chaque serveur BCKi, i allant de 1 à m
Verif CeBi, Verif CBi

### R5.9 Génération par le dispositif des clés de session kBi et vérification des codes de hachage chiffrés CHi

Pour chaque serveur BCKi, i allant de 1 à m
kBi = ECDH(peD, PeBi)
{Hi}⁻¹kBi
Validate Hi (Hi = Hash(PeBi∥BCKID∥BCKDT)

### R6. Préparation de la restauration

### R6.1 Envoi par le dispositif à l'orchestrateur de confirmations de restauration

[HW'→ ORC1]
{ConfirmRestore1}kB1∥{ConfirmRestore2}kB2∥...∥{ConfirmRestorei}kBi∥...∥ {ConfirmRestoreₘ}kBm → ORC1

Le dispositif HW renvoie à l'orchestrateur ORC1 pour chaque serveur BCKi, une confirmation de restauration individuelle "ConfirmRestoreᵢ" qui est chiffrée avec la clé kBi de chaque serveur BCKi. Chaque confirmation est un code binaire prédéfini.

R6.2 Envoi aux serveurs BCKi des confirmations de restauration
Pour chaque serveur BCKi, i allant de 1 à m
BCKID∥{ConfirmRestoreᵢ}kBi → BCKi

L'orchestrateur ORC1 envoie à chaque serveur BCKi l'identifiant de la sauvegarde BCKID concaténé et la confirmation de restauration {ConfirmRestoreᵢ}kBi qui lui est destinée.

### R6.3 Vérification par les serveurs BCKi des confirmations de restauration

Pour chaque serveur BCKi, i allant de 1 à m
{ConfirmRestoreᵢ}⁻¹kBi
Store CD

Chaque serveur BCKi déchiffre le message de confirmation émis par le dispositif HW et qui lui a été communiqué par l'orchestrateur ORC1, et mémorise le certificat CD du dispositif HW' qu'il a précédemment vérifié.

### R6.4 Confirmation par chaque serveur BCKi que la restauration peut être initiée sous réserve de vérification d'identité

[BCKi→ ORC1]
Pour chaque serveur BCKi, i allant de 1 à m
OK_for_IDV

Claque serveur BCKi indique à l'orchestrateur ORC1 qu'il est prêt à restituer la part Si qu'il a sauvegardée sous réserve que l'utilisateur s'identifie à travers une étape IDVi.

### R7. Réalisation des étapes de vérification d'identité IDVi par les serveurs IDVSRVi

Pour chaque serveur BCKi, i allant de 1 à m
IDVRi

L'utilisateur est redirigé par l'orchestrateur ORC1 sur chaque serveur BCKi et chaque serveur BCKi procède à sa propre vérification IDVi de l'identité pivot de l'utilisateur. Dans le présent mode de réalisation où les étapes IDVi sont confiées à des prestataires, chaque serveur BCKi connecte l'utilisateur au serveur IDVSRVi auquel il est affilié à travers une passerelle GTW. Le service IDVSi du prestataire procède à une vérification de l'identité de l'utilisateur, puis confirme à l'orchestrateur ORC1 que son identité a été vérifiée et que l'étape de sauvegarde de la graine peut être initiée.

Il sera noté que la durée de chaque étape de vérification d'identité IDVRi peut aller de quelques minutes à plusieurs jours selon les exigences de chaque serveur BCKi ou du prestataire qui réalise l'IDVRi. Des vérifications par des personnes physiques peuvent être systématiquement prévues avec certains prestataires d'IDV.

### R8. Rétablissement des canaux de communication sécurisés après réalisation des étapes de vérification d'identité IDVi

[HW → ORC1]
Continue Restore

Une fois l'étape de vérification d'identité terminée, soit parfois plusieurs jours plus tard, l'utilisateur relance l'étape de restauration. Le dispositif HW envoie à l'orchestrateur ORC1 une demande de reprise de la restauration "Continue Restore ".

Répétition des étapes R2.1 à R2.7, R3, R5.1 à R5.9
Comme plusieurs jours peuvent s'écouler pendant la réalisation des étapes de vérification IDVi, dans un mode de réalisation les certificats de session précédents ne sont pas conservés. Ainsi, les étapes R2.1 à R2.7, R3, R5.1 à R5.9 sont exécutées de nouveau pour reprendre le processus de restauration là où il s'était arrêté, mais avec de nouvelles clés de session k0 et kBi.

### R9. Reprise de la restauration

[ORC1 → BCKi]
Pour chaque serveur BCKi, i allant de 1 à m (ou i allant de 1 à n)
Continue Restore → BCKi

Une fois les canaux sécurisés réouverts au moyen de nouvelles clés de session, l'orchestrateur répercute aux serveurs BCKi la demande de poursuite de la restauration. Il sera noté que si au cours des étapes IDVRi l'un des serveurs BCKi n'a pas pu vérifier l'identité de l'utilisateur avec un degré de certitude déterminé, il refusera de restituer la part qu'il détient et en informera l'orchestrateur ORC1. Si un nombre déterminé de serveurs de sauvegarde BCKi n'a pas vérifié avec succès l'identité de l'utilisateur et refuse de restituer les données qu'ils détiennent, l'orchestrateur peut être configuré pour suspendre la restitution des parts par les serveurs qui ont vérifié avec succès l'identité de l'utilisateur. Il peut optionnellement décider de soumettre l'utilisateur à une procédure supplémentaire de vérification de son identité. L'orchestrateur peut également être configuré pour analyser des scores de certitude quant à la vérification de l'identité de l'utilisateur, comme indiqué plus haut, et prendre une décision en fonction de cette analyse.

Par ailleurs, dans une variante du procédé mentionnée ci-dessus et dans ce qui suit entre parenthèses, cette étape est limitée n serveurs de sauvegarde BCKi, au lieu de l'ensemble des serveurs de sauvegarde, si n parts seulement sont nécessaires à la reconstitution de la graine, avec n inférieur à m.

### R10. Vérification du certificat du dispositif

Pour chaque serveur BCKi, i allant de 1 à m (ou i allant de 1 à n)
Verif CD = CD

Chaque serveur BCKi s'assure que le certificat CD du dispositif HW est le même que le certificat CD reçu avant la conduite des étapes de vérification d'identité IDVi, qu'il a conservé.

### R11. Transfert des parts à l'orchestrateur par les serveurs BCKi

Pour chaque serveur BCKi, i allant de 1 à m (ou i allant de 1 à n)
{S1}kB1∥{S2}kB2∥....∥{Si}kBi∥...∥{Sm}kBm → ORC1

Chaque serveur BCKi envoie à l'orchestrateur ORC1 la part Si qu'il détient, chiffrée au moyen de sa clé kBi, que l'orchestrateur ne connaît pas.

### R12. Transfert des parts au dispositif par l'orchestrateur

{S1}kB1∥{S2}kB2∥....∥{Si}kBi∥...∥{Sm}kBm → HW

L'orchestrateur ORC1 envoie au dispositif HW toutes les parts Si reçues des serveurs BCKi sous forme chiffrée au moyen des clés kBi.

### R13. Déchiffrement des parts par le dispositif et restauration de la graine

Pour chaque serveur BCKi, i allant de 1 à m (ou i allant de 1 à n)
{Si}⁻¹kBi
S = SS⁻¹ (S1, S2,... Si... Sm)
(ou S = SS⁻¹ (S1, S2, ... Si... Sn))

Après avoir déchiffré chaque part de rang i au moyen de la clé kBi correspondante, le dispositif HW restaure la graine à partir des parts reçues, ou d'une partie de celles-ci si leur nombre est supérieur à n.

### R14. Confirmation finale

OK → ORC1

Le dispositif HW confirme à l'orchestrateur ORC1 que la restauration de la graine est terminée.

Il apparaîtra clairement à l'homme de l'art que le procédé qui a été décrit est susceptible de nombreuses autres variantes et modes de réalisation. La structure des certificats mis en jeu dans le procédé a été décrite ci-dessus selon deux variantes, par exemple :
Cx = [Px, Sign(pL, Px)]
Cex = Pex∥{Sign(px, Rex∥Pex)

Les certificats éphémère pourraient aussi être du type :
Cex = Pex∥{Sign(px, Pex)

Le procédé peut aussi être mis en œuvre avec toute structure de certificat. Des certificats de type X509 peuvent notamment être utilisés. De même, d'autres fonctions de chiffrement ou algorithmes cryptographiques peuvent être utilisés, notamment dans le cadre d'une mise en œuvre basée sur la crytographie RSA.

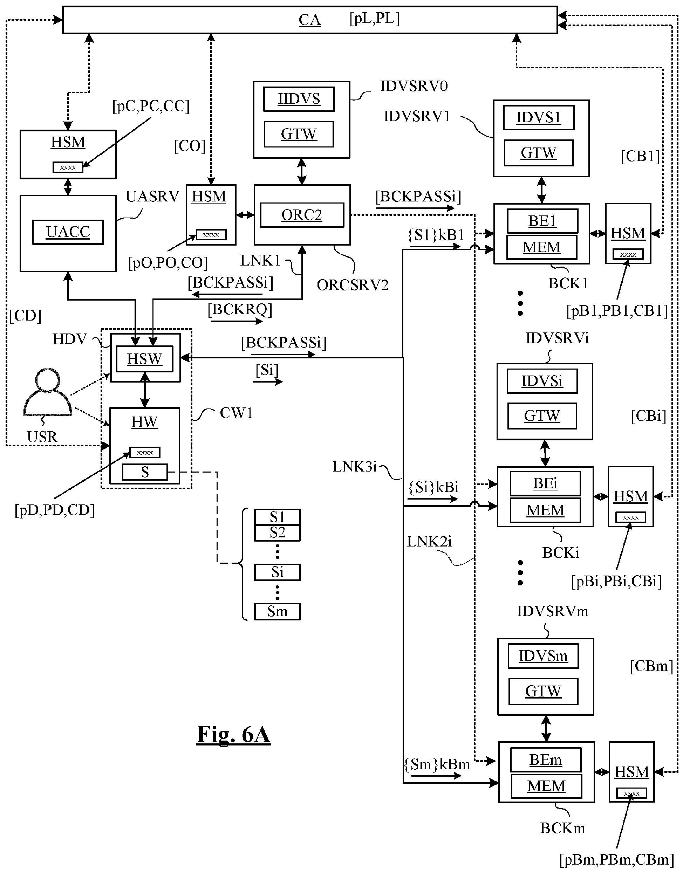

La figure 6A montre un système pour la mise en œuvre du procédé de l'invention qui se distingue de celui de la figure 3A en ce que le serveur ORCSRV1 est remplacé par un serveur ORCSRV2 qui exécute un programme orchestrateur ORC2 (ci-après "orchestrateur ORC2"). L'orchestrateur OCR2 diffère de l'orchestrateur ORC1 en ce qu'il n'assure pas la transmission au dispositif HW des données émises par les serveurs de sauvegarde BCKi, et réciproquement, et n'agit donc pas comme une passerelle ou "serveur proxy".

Lorsque l'utilisateur initie une étape de sauvegarde de la graine, le dispositif HW adresse à l'orchestrateur OCR2 une requête en sauvegarde BCKRQ à la suite de quoi l'orchestrateur ORC2 engage les étapes précédemment décrites de génération d'un identifiant BCKID de la sauvegarde, et de collecte d'informations concernant l'utilisateur, pour générer les données de la sauvegarde BCKDT. L'orchestrateur conduit également l'étape initiale IDVO de vérification de l'identité de l'utilisateur. Si cette étape est concluante, l'orchestrateur délivre au dispositif HW des autorisations de sauvegarde BCKPASSi, à raison d'une autorisation par serveur de sauvegarde BCKi, et envoie chaque autorisation au serveur BCKi concerné.

Chaque autorisation BCKPASSi forme une sorte de "passeport" permettant au dispositif HW de savoir à quel serveur BCKi il doit s'adresser pour sauvegarder une part Si de la graine, et lui permettant de se connecter au serveur BCKi pour procéder à la sauvegarde sans être rejeté par ce dernier. Chaque autorisation BCKPASSi peut comprendre diverses informations et notamment les informations qui figuraient précédemment dans les données de la sauvegarde BCKDT et l'identifiant BCKID. Les autorisations BCKPASSi sont conservées par le logiciel compagnon ainsi que, de préférence, dans le compte de l'utilisateur UACC sur le serveur de compte UASRV. Dans une variante, l'orchestrateur délivre une autorisation générale BCKPASS contenant une concaténation de toutes les informations figurant dans les autorisations BCKPASSi.

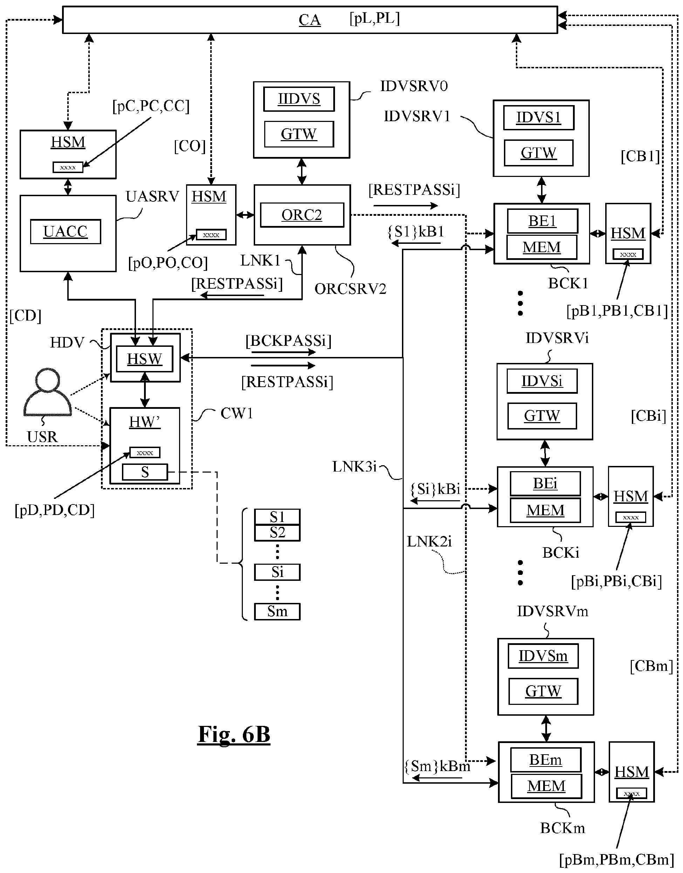

En référence à la figure 6B, lorsque l'utilisateur veut restaurer la graine, le logiciel compagnon se connecte aux serveurs de sauvegarde BCKi qu'il identifie au moyen des adresses contenues dans les autorisations BCKPASSi, puis passe la main au dispositif HW pour qu'il établisse des canaux sécurisés avec les serveurs de sauvegarde BCKi, par des échanges de clé tels que décrits plus haut. Lorsque les canaux sécurisés ont été créés, les serveurs de sauvegarde BCKi engagent les étapes IDVi de vérification de l'identité pivot de l'utilisateur.

Le rôle de superviseur des étapes IDVi qui a été précédemment dévolu à l'orchestrateur ORC1 peut également être dévolu ici à l'orchestrateur ORC2. Ce dernier est alors sollicité par les serveurs de sauvegarde BCKi pour analyser les résultats des étapes IDVi. Si ces résultats sont concluants, l'orchestrateur ORC2 délivre au dispositif HW des autorisations de restauration RESTPASSi qu'il communique également aux serveurs de sauvegarde BCKi. Le dispositif HW rétablit ensuite un canal sécurisé avec les serveurs de sauvegarde BCKi et leur présente les autorisations RESTPASSi pour récupérer les parts Si de la graine.

Dans le cas, ultime, où l'utilisateur aurait fermé son compte sur le serveur de compte UASRV, désinstallé le logiciel compagnon en effaçant les données qu'il comportait, et ne pourrait donc plus récupérer les autorisations BCKPASSi, ainsi que dans le cas, tout aussi ultime, où l'orchestrateur ORC2 n'existerait plus, une solution peut être prévue pour permettre à l'utilisateur de récupérer sa graine, en lui permettant de conduire une pluralité d'étapes individuelles de vérification de son identité auprès de chaque serveur de sauvegarde BCKi .

Dans une variante du procédé permettant de faciliter la récupération des parts en cas de défaillance totale du système, ou de perte de l'identifiant BCKID (mode de réalisation figures 3A, 3B) ou des autorisations BCKPASSi, il peut être prévu que l'organisation en charge de l'orchestrateur ORC1 ou ORC2 délivre à l'utilisateur, par exemple par la voie postale, un certificat de sauvegarde revêtu d'un certificat d'authenticité inviolable tel un hologramme. Un tel certificat de sauvegarde n'épargnera pas l'utilisateur des étapes de vérification de son identité auprès des serveurs de sauvegarde, mais comportera suffisamment d'informations pour offrir un degré supplémentaire de certitude quant à sa qualité de détenteur légitime de la graine lorsque les étapes de vérification IDVi seront conduites.

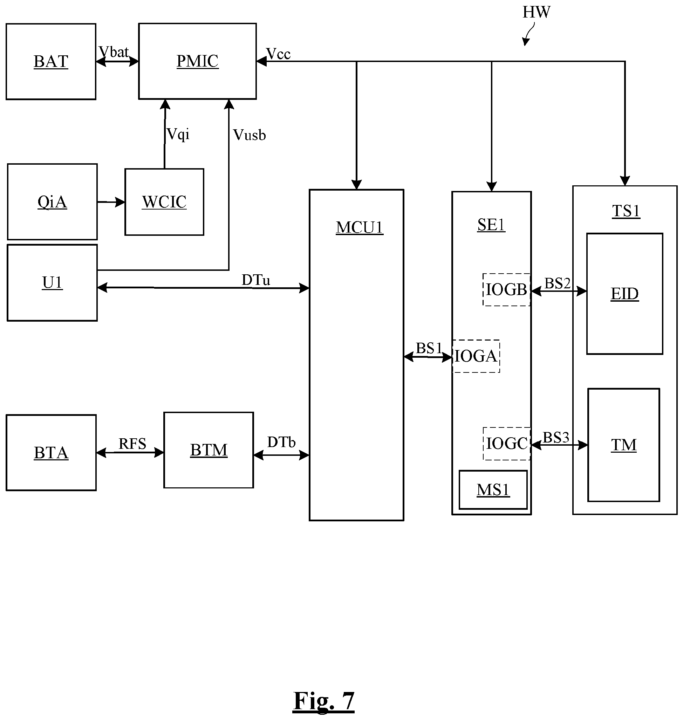

La figure 7 montre un exemple de réalisation d'un portefeuille matériel HW permettant la mise en œuvre du procédé. Le dispositif HW comprend un élément sécurisé SE1, un microcontrôleur MCU1 et un écran tactile TS1 ("Touch Screen"). L'écran tactile TS1 comprend un afficheur à encre électronique EID ("E-Ink Display") et un module tactile TM ("Touch Module"). L'écran tactile TS1 est sous le contrôle de l'élément sécurisé SE1. A cet effet, les ressources en termes d'entrées/sorties de l'élément sécurisé SE1 sont réparties en trois groupes d'entrées/sorties IOGA, IOGB, IOGC. Le groupe d'entrées/sorties IOGA est affecté à la mise en œuvre d'un bus BS1 reliant l'élément sécurisé SE1 au microcontrôleur MCU1. Le groupe d'entrées/sorties IOGB est affecté à la mise en œuvre d'un bus BS2 reliant l'élément sécurisé SE1 à l'afficheur EID, et le groupe d'entrées/sorties IOGC est affecté à la mise en œuvre d'un bus BS3 reliant l'élément sécurisé SE1 au module tactile TM. Le bus BS1 est par exemple un bus IEC/ISO 7816, le bus BS2 est par exemple un bus SPI et le bus BS3 un bus I2C. L'élément sécurisé est par exemple une puce STMicroelectronics^{®} de la série ST33K. Le dispositif HW comporte par ailleurs divers périphériques contrôlés par le microcontrôleur MCU1, par exemple :
- une batterie BAT ;
- un circuit intégré PMIC de gestion d'alimentation reçoit une tension Vbat de la batterie lorsque celle-ci est chargée, fournit la tension Vbat à la batterie lorsque celle-ci doit être chargée, et fournit une tension d'alimentation régulée Vcc au microcontrôleur MCU1, à l'élément sécurisé SE1 et à l'écran tactile TS1 ;
- une antenne QiA pour la charge de la batterie par induction conformément à la technologie Qi. L'antenne QiA est reliée à un circuit intégré de charge sans fil WCIC ("Wireless Charging Integrated Circuit") . Le circuit WCIC fournit une tension Vqi au circuit PMIC pour la charge de la batterie ;
- un port USB U1. Le port USB fournit au circuit PMIC une tension Vusb pour la charge de la batterie, fournit au microcontrôleur MCU1 des données DTu reçues d'un dispositif externe connecté au port USB, et transmet des données DTu au dispositif externe ;
- une antenne Bluetooth BTA, recevant un signal radiofréquence RFS fourni par un circuit BTM de gestion des communications Bluetooth. Le circuit BTM fournit des données DTb échangées avec un dispositif externe via une liaison Bluetooth ou transmet des données DTb au dispositif externe via la liaison Bluetooth.

Le dispositif HW présente l'avantage de posséder un écran tactile exclusivement contrôlé par l'élément sécurisé SE1 et donc non susceptible de corruption, y compris en cas d'attaque sur le microcontrôleur MCU1. Ce dernier n'exécute aucun programme d'application et ne stocke aucun des secrets cryptographiques utilisés par l'élément sécurisé. Il gère seulement les périphériques en transmettant à l'élément sécurisé les données DTb, DTu reçues par l'interface de communication choisie par l'utilisateur, ou en transmettant au dispositif externe des données DTb, DTu fournies par l'élément sécurisé. Le dispositif HW n'offre donc aucune possibilité de connexion directe à l'Internet et reste, malgré son écran tactile, un portefeuille matériel pour le stockage à froid de clés privées offrant le plus haut niveau de sécurité. L'élément sécurisé SE1 comporte également un espace mémoire MS1 comprenant une zone de mémoire morte, une zone mémoire non volatile programmable et effaçable électriquement et une zone mémoire volatile. La zone mémoire non volatile programmable et effaçable électriquement reçoit un système d'exploitation de l'élément sécurisé. Celui-ci est configuré pour permettre la mise en œuvre du procédé de l'invention.

Le dispositif HW se prête bien à la mise en œuvre du procédé grâce à son écran tactile, qui peut être choisi de grande taille et présenter par exemple une diagonale supérieure ou égale à 3,5 pouces (un pouce étant égal à 2,54 cm), et comprendre au moins 600 x 400 pixels. Dans un mode de réalisation, l'écran présente une diagonale de 3,9 pouces (9,906 cm) et offre 670 x 496 pixels, ce qui constitue un très grand écran pour un portefeuille matériel de cryptoactifs dépourvu de connectivité Internet.

Les tableaux 2 et 3 ci-après ainsi que les figures 8 et 9 décrivent un exemple de configuration du dispositif HW et du logiciel compagnon HSW pour la mise en œuvre d'un mode de réalisation du procédé de l'invention, dans lequel trois serveurs de sauvegarde sont utilisés, la graine étant donc sauvegardée au moyen de trois parts. Le dispositif HW est utilisé en association avec le dispositif hôte HDV auquel il peut être relié via son interface USB ou Bluetooth. En sus de l'écran tactile TS1 du dispositif HW, le dispositif hôte HDV comporte lui-même un écran permettant à l'utilisateur USR de conduire avec le logiciel compagnon, certaines étapes du procédé tandis que d'autres étapes sont réalisées avec le dispositif HW.

Dans les tableaux 2 et 3, les mentions entre crochets correspondent à des boutons virtuels que l'utilisateur doit presser pour sélectionner l'option qu'il retient. Les mentions entre guillemets sont des informations affichées par le dispositif HW ou le dispositif hôte HDV. Les mentions "xx" correspondent à des zones affichées ou des zones dans lesquelles l'utilisateur doit fournir les informations demandées.

Le tableau 2 ci-après et la figure 8 décrivent la mise en œuvre du procédé en ce qui concerne la sauvegarde de la graine. Au cours d'une étape D0, le logiciel compagnon offre à l'utilisateur le choix entre, d'une part, sauvegarder sa graine et, d'autre part, initialiser ou restaurer le dispositif HW. On suppose ici que le dispositif HW a été préalablement mis en service mais que l'utilisateur n'a jamais sauvegardé sa graine. Ce dernier choisit donc la première option. Au cours d'une étape D1, le logiciel compagnon offre deux options à l'utilisateur, à savoir une sauvegarde classique qui consistera dans l'affichage de la phrase de récupération par le dispositif HW afin que l'utilisateur puisse la sauvegarder sur le support de son choix, ou une sauvegarde en faisant appel à un service de protection automatique mettant en œuvre le procédé selon l'invention. Au cours d'une étape D3, l'utilisateur est invité à créer un compte sur le serveur de comptes clients. Au cours d'une étape D4, l'utilisateur crée ce compte et fournit des informations relatives à son identité, dont une partie au moins constitue les informations de son identité pivot incorporée dans les données de la sauvegarde BCKDT. Au cours d'une étape D5 il définit le mot de passe de son compte.

Au cours d'une étape D6 le logiciel compagnon rappelle à l'utilisateur qu'il va devoir se soumettre à une étape de vérification de son identité. Il s'agit ici de l'étape IDVO qui permettra à l'orchestrateur de s'assurer que les informations constituant son identité pivot sont correctes, notamment son prénom, son nom et sa date de naissance. L'étape IDVO est conduite à des étapes D7 à D11 au moyen de l'écran du dispositif hôte HDV, ainsi que sa caméra. Une fois l'étape IDVO réalisée avec succès, l'utilisateur doit connecter le dispositif HW au dispositif hôte HDV à une étape D12.

Ensuite, le dispositif HW prend en charge la suite du processus en demandant à l'utilisateur à une étape D13 de saisir son mot de passe, puis à des étapes D14, D15 de vérifier son identité. Le dispositif HW procède ensuite à la sauvegarde de la graine à une étape D16.

Le tableau 3 ci-après et la figure 9 décrivent l'étape de restauration de la graine. A l'étape D0, l'utilisateur choisit l'option Initialiser/Restaurer. Au cours d'une étape D20, le logiciel compagnon demande à l'utilisateur de connecter le dispositif HW' au dispositif hôte HDV. Au cours d'une étape D21, le logiciel compagnon et le dispositif HW' confirment que la connexion a été effectuée. Au cours d'une étape D22, l'utilisateur doit entrer le mot de passe du dispositif HW'. Au cours d'une étape D22, le dispositif HW' propose à l'utilisateur de préciser s'il veut initialiser le dispositif HW en tant que nouveau dispositif ou s'il veut procéder à une restauration à partir d'une phrase de récupération. L'utilisateur choisit ici l'option "restauration". Au cours d'une étape D24, le dispositif HW demande à l'utilisateur s'il veut restaurer le dispositif HW" à partir du service de protection selon l'invention ou à partir d'une phrase de récupération qu'il aurait conservée (restauration manuelle). L'utilisateur choisit le service de protection.

Au cours d'une étape D25, le logiciel compagnon prend en charge la suite du processus et informe l'utilisateur qu'il va devoir se soumettre à trois étapes de vérification de son identité. La première sera effectuée avec le dispositif HW' et les deux autres seront effectuées auprès de prestataires d'IDV. Au cours d'une étape D26, l'utilisateur doit confirmer les informations affichées par le dispositif HW' concernant son identité pivot (des informations supplémentaires à celles formant l'identité pivot peuvent être affichées par le dispositif HW' au cours de cette étape, comme on le voit sur le tableau 3). Au cours d'une étape D27, le logiciel compagnon indique à l'utilisateur qu'il va être mis en relation avec le premier partenaire d'IDV et lui demande de confirmer son accord. L'accord de l'utilisateur conduit le logiciel compagnon à se mettre en liaison avec un serveur partenaire IDVSRVi, par l'intermédiaire de sa passerelle GTW, comme décrit plus haut. Au cours d'étapes D28 à D32, l'utilisateur réalise les actions demandées par le premier partenaire d'IDV pour l'acquisition des informations nécessaires à la première vérification d'identité, au moyen de l'écran et de la caméra du dispositif hôte HDV. Au cours d'une étape D33, le logiciel compagnon indique à l'utilisateur qu'il va être mis en relation avec le deuxième partenaire d'IDV et lui demande de confirmer son accord. L'accord de l'utilisateur conduit le logiciel compagnon à se mettre en liaison avec un autre serveur partenaire IDVSRVi, par l'intermédiaire de sa passerelle GTW. Au cours d'étapes résumées dans le tableau par une seule étape D34, l'utilisateur réalise les actions demandées par le deuxième partenaire d'IDV pour l'acquisition des informations nécessaires à la deuxième vérification d'identité. Ces étapes peuvent être identiques, similaires ou différentes de celles de la première vérification d'identité. Il sera noté que la vérification d'identité n'est pas achevée une fois ces étapes réalisées et que le résultat de chaque vérification pourrait n'être fourni à l'utilisateur que quelques heures voire quelques jours plus tard, comme cela a été expliqué plus haut. Lorsque l'identité de l'utilisateur a été vérifiée, le dispositif HW' récupère les parts S1, S2, S3 de la graine et restaure celle-ci au cours d'une étape D35.

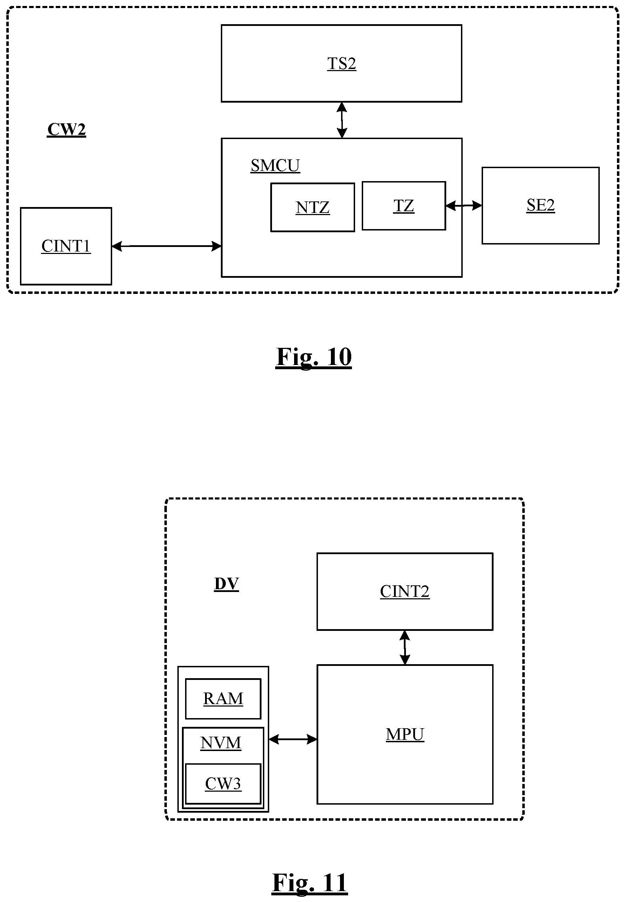

Il apparaîtra clairement à l'homme de l'art que le procédé qui vient d'être décrit peut également être mis en œuvre avec d'autres types de portefeuilles de cryptoactifs que celui qui vient d'être décrit. Le procédé peut notamment être mis en œuvre avec un portefeuille de cryptoactifs CW2 du type montré sur la figure 10. Le portefeuille de cryptoactifs CW2 comprend un microcontrôleur sécurisé SMCU, un écran TS2 pouvant être tactile, des circuits d'interface de communication CINT1 comprenant notamment une connectivité wifi et/ou Ethernet et lui permettant de se relier à l'Internet. Le microcontrôleur sécurisé utilise deux processeurs virtuels associés à un contrôle d'accès matériel, permettant de gérer deux zones TZ, NTZ d'exécution d'applications offrant des degrés de sécurité différents, la zone TZ étant appelée "zone de confiance" ("Trust Zone"). Le microcontrôleur sécurisé peut, dans certains modes de réalisation, être équipé d'un élément sécurisé SE2 couplé à la zone de confiance TZ pour réaliser des calculs cryptographiques et conduire les opérations les plus sensibles en termes de sécurité, notamment stocker la graine ainsi que diverses clés de comptes de cryptoactifs. Chaque zone peut fonctionner indépendamment de l'autre tout en utilisant le même noyau. En général, le microcontrôleur exécute un système d'exploitation dit "riche" dans la zone la moins fiable NTZ, par exemple Android, et un code spécialisé dans la zone de confiance TZ. Un tel dispositif est l'équivalent de la combinaison du portefeuille matériel HW (équivalent à la zone de confiance) et du dispositif hôte HDV (équivalent à la zone moins sécurisée) décrits dans ce qui précède, et n'a pas besoin d'être relié à un dispositif hôte pour exécuter des opérations sur la blockchain.

Le procédé de l'invention peut également être mis en œuvre avec un portefeuille de cryptoactifs de type logiciel ("software wallet"). Contrairement à un portefeuille en ligne, un portefeuille logiciel permet stocker des clés de cryptoactifs directement sur un ordinateur de bureau, un ordinateur portable, un téléphone mobile ou équivalent. L'utilisateur conserve la propriété de ses clés et de la graine, et doit sécuriser lui-même leur stockage en faisant en sorte qu'un fraudeur ne puisse pas s'en emparer. A titre d'exemple, la figure 11 montre un portefeuille de cryptoactifs CW3 de type logiciel exécuté par un dispositif électronique DV qui peut être du type précité, ordinateur, téléphone mobile ou équivalent. Le dispositif DV comprend un microprocesseur MPU équipé d'une interface de communication CINT2 lui permettant de se relier à l'Internet, d'une mémoire volatile RAM et d'une mémoire non volatile NVM, par exemple un disque dur magnétique ou un disque dur à l'état solide (SSD). Le programme CW3 formant le portefeuille de cryptoactifs logiciel est stocké dans la mémoire non volatile NVM du dispositif DV et est exécuté par le microprocesseur MPU à l'aide de sa mémoire RAM.

**Tableau 2 : sauvegarde de la graine, interaction entre l'utilisateur, le portefeuille matériel HW et le dispositif hôte HDV**

| [Tab 2] | | | |
|---|---|---|---|
| | Informations affichées sur l'écran tactile TS1 du dispositif HW | Informations affichées par le dispositif hôte HDV | Actions de l'utilisateur USR |
| D0 | | [Sauvegarder] | L'utilisateur sélectionne |
| | | [Initialiser/Restaurer] | |
| | | | "Sauvegarder" |
| D1 | | "Choisissez le type de protection de votre phrase de récupération" : | L'utilisateur sélectionne [Service de protection automatique de la phrase de récupération ] |
| | | [D1.1] [Affichage de la phrase de récupération sur votre dispositif et sauvegarde par vous-même] | |
| | | [D1.2] [Service de protection automatique de la phrase de récupération] | |
| D2 | | "Après création de votre compte et confirmation de votre identité par l'un de nos partenaires d'IDV, votre phrase de récupération sera liée à votre identité en toute sécurité. Votre phrase de récupération sera partagée en trois parts sauvegardées de manière décentralisée, et ne pourra pas vous être dérobée" | Lecture de l'information affichée puis confirmation du choix du service de protection |
| | | [Confirmez votre choix du service de protection] | |
| D3 | | Veuillez préalablement créer un compte : | Fournit son accord sur la création du compte |
| | | [Création d'un compte] | |
| D4 | | "Nom : " xx | Fournit les informations demandées, puis valide |
| | | "Prénom :" xx | |
| | | "Date de naissance :" xx | |
| | | "Nationalité : "xx | |
| | | "Lieu de naissance :" xx | |
| | | [Validez] | |
| | | "Adresse email :" xx | |
| | | [Validez] | |
| | | "Code de vérification reçu par email :" xx | |
| | | [Validez] | |
| D5 | | "Création d'un mot de passe fort" | Fournit le mot de passe et le valide |
| | | "Entrez votre mot de passe : "xx" | |
| | | "Confirmez le mot de passe : "xx" | |
| | | [Validez] | |
| D6 | | "Votre compte a été créé avec succès. Vous allez maintenant confirmer votre identité auprès de notre partenaire" | L'utilisateur confirme son accord sur la vérification de son identité |
| | | [Je suis d'accord] | |
| D7 | | "Choisissez le type de document d'identité" [Passeport] [Permis de | Choisit le type de document |
| | | conduire] [Carte nationale d'identité] [(Autre choix)] | |
| D8 | | "Présentez votre document d'identité dans le cadre" | Exécute l'étape |
| D9 | | "Vérifiez la photo et validez son envoi" | Vérifie et valide l'envoi de la photo |
| | | [Envoyez la photo] | |
| D10 | | "Placez votre visage dans le cadre et commencez la vidéo" | Exécute l'étape proposée |
| | | [Démarrez l'enregistrement] | |
| D11 | | "Vérifiez la vidéo puis envoyez-la" | Vérifie la vidéo puis valide l'envoi |
| | | [Envoyez la vidéo] | |
| D12 | | "Connectez le dispositif dont vous voulez sauvegarder la phrase de récupération " | Connecte le dispositif HW au dispositif hôte |
| D13 | "Entrez votre PIN code : xx" [Validez] | "Déverrouillez votre portefeuille matériel en saisissant votre mot de passe personnel (code PIN)" | Fournit son mot de passe |
| D14 | [Vérifiez votre identité avant de sauvegarder votre phrase de récupération] | | Donne son accord sur la confirmation d'identité |
| D15 | "Nom, prénom, date de naissance, nationalité, lieu de naissance" [Confirmez] | | Confirme la véracité des informations affichées |
| D16 | "Stockage de votre phrase de récupération en cours" | | Attend que le processus soit terminé |
| D17 | "Votre phrase de récupération stockée en toute sécurité" | "Compte créé : OK | |
| | | Confirmation d'identité : OK | |
| | | Connexion de votre dispositif : OK | |
| | | Sauvegarde de votre phrase de récupération : OK" | |
| D18 | | "Votre phrase de récupération a été sauvegardée. Restaurez-la dans un autre dispositif chaque fois que cela sera nécessaire" | |

**Tableau 3 : Restauration de la graine, interaction entre l'utilisateur et le portefeuille matériel HW et le dispositif hôte HDV**

| [Tab 3] | | | |
|---|---|---|---|
| | Informations affichées sur l'écran tactile TS1 du dispositif HW | Informations affichées sur le dispositif hôte HDV | Actions de l'utilisateur USR |
| D0 | | [Sauvegarder] | L'utilisateur sélectionne |
| | | [Initialiser/Restaurer] | "Initialiser/Restaurer" |
| D20 | "En attente" | "Connectez le portefeuille matériel " | Connecte son dispositif au dispositif hôte |
| D21 | "Connecté" | "Connecté à votre portefeuille matériel" | |
| D22 | "Entrez votre PIN :"xx" | "Entrez un mot de passe (PIN) sur votre dispositif" | Définit son mot de passe |
| D23 | [D23.1] [Nouveau dispositif] | "Comment voulez-vousinitialiser votre dispositif ? | Choisit l'option |
| | [D23.2] [Restauration avec une phrase de récupération] | Nouveau dispositif ou restauration avec une phrase de récupération? Faites votre choix sur l'écran de votre dispositif" | "restauration" |
| D24 | [D24.1][Restauration avec le service de protection] | "Comment voulez-vous restaurer votre dispositif ? | Choisit la restauration avec le service de protection |
| | [D24.2][Restauration manuelle avec une phrase de récupération] | Faites votre choix sur votre dispositif" | |
| D25 | | "Nous vous proposons les étapes suivantes : | Donne son accord sur le processus de vérification d'identité qui lui est proposé |
| | | 1. Confirmation de votre identité avec votre dispositif | |
| | | 2. Vérification de votre identité par un premier partenaire d'IDV | |
| | | 3. Vérification de votre identité par un deuxième partenaire d'IDV" | |
| | | [Je suis d'accord] | |
| D26 | (HW' affiche les informations concernant l'identité de l'utilisateur) | "1. Confirmez votre identité telle qu'affichée sur votre dispositif" | Confirme les informations affichées par le dispositif HW |
| | "Nom :" xx | | |
| | "Prénom :" xx | | |
| | "Date de naissance :" xx | | |
| | "Nationalité :" | | |
| | xx "Lieu de naissance :" xx | | |
| | "Adresse email : xx" | | |
| | [Valider] | | |
| D27 | | "2. Vérification de votre identité par notre premier partenaire d'IDV" | Donne son accord |
| | | [Confirmer] | |
| D28 | | "Choisissez le type de document" [Passeport] [Permis de conduire] [Carte nationale d'identité] [(Autre choix)] | Choisit le type de document |
| D29 | | "Présentez votre document d'identité dans le cadre" | Exécute l'étape proposée |
| D30 | | "Vérifiez la photo et validez son envoi" | Vérifie pour valide l'envoi de la photo |
| | | [Envoi de la photo] | |
| D31 | | "Placez votre visage dans le cadre et commencez la vidéo" | Exécute l'étape proposée |
| | | [Démarrez l'enregistrement] | |
| D32 | | "Vérifiez la vidéo puis envoyez-la" | Vérifie la vidéo puis valide l'envoi de la vidéo |
| | | [Envoi de la vidéo] | |
| D33 | | "2. Vérification de votre identité par notre deuxième partenaire d'IDV" | Donne son accord |
| | | [Confirmer] | |
| D34 | | (conduite du deuxième processus de vérification d'identité identique, similaire ou différent du premier) | Exécute les étapes |
| D35 | "Restauration de votre phrase de récupération en cours" | "1. Confirmation de votre identité avec votre dispositif : OK | |
| | | 2. Confirmation de votre identité par notre premier partenaire d'IDV : OK | |
| | | 3. Confirmation de votre identité par notre second partenaire d'IDV : OK | |
| D36 | Affiche un menu | "Votre phrase de récupération a été restaurée" | |

## Revendications

1. Procédé pour la sauvegarde et la restauration d'un secret (S) détenu par un premier portefeuille de cryptoactifs (CW1, HW, HDV, CW2, CW3) qui est la propriété d'un utilisateur (USR), le portefeuille de cryptoactifs comprenant un portefeuille matériel (HW) pour le stockage à froid du secret, **caractérisé en ce qu'**il comprend les étapes consistant à :
- prévoir un programme orchestrateur (ORC1, ORC2) exécuté par un serveur (ORCSRV1, ORCSRV2), et une pluralité de serveurs de sauvegarde (BCKi),
- établir (B5) un canal de communication chiffré entre le portefeuille de cryptoactifs et le programme orchestrateur,
- au moyen du portefeuille de cryptoactifs, générer (B9) une pluralité de données secrètes (Si) à partir du secret (S), chiffrer (B10) les données secrètes ({Si}kBi) et transférer (B11) chaque donnée chiffrée au programme orchestrateur,
- au moyen du programme orchestrateur, transférer (B12) à chaque serveur de sauvegarde (BCKi) l'une des données secrètes, sous sa forme chiffrée ({Si}kBi),
- dans chaque serveur de sauvegarde, déchiffrer la donnée (B13) et la sauvegarder en l'associant à l'identité de l'utilisateur,
- l'étape de sauvegarde (B10-B13) des données secrètes étant précédée des étapes consistant à :
- au moyen du portefeuille de cryptoactifs, et par l'intermédiaire du programme orchestrateur, mettre en relation (IDVO) l'utilisateur avec un serveur (IDVSRV0, IDVSO) de vérification d'identité,
- au moyen du serveur (IDVSRV0, IDVSO) de vérification d'identité, collecter des informations (BCKDT) relatives à l'identité de l'utilisateur (B3, IDV0), et vérifier (B3, IDV0) les informations relatives à l'identité de l'utilisateur, et
- au moyen du programme orchestrateur, communiquer (B6) à chaque serveur de sauvegarde, les informations (BCKDT) relatives à l'identité vérifiée de l'utilisateur,
et **en ce qu'**il comprend l'étape consistant à :
- restaurer (R1-R14) le secret dans un deuxième portefeuille de cryptoactifs (CW1, HW', HDV, CW2, CW3) à partir de tout ou partie des données secrètes détenues par les serveurs de sauvegarde, l'étape de restauration (R1-R14) étant précédée d'une pluralité d'étapes (R7, IDVi) de vérification de l'identité de l'utilisateur par au moins une partie des serveurs de sauvegarde, un serveur de sauvegarde configuré pour vérifier l'identité de l'utilisateur étant également configuré pour refuser de restituer la donnée secrète qu'il détient si la vérification de l'identité de l'utilisateur n'est pas concluante.

2. Procédé selon la revendication 1, dans lequel l'étape de sauvegarde (B10-B12) des donnés secrètes n'est pas effectuée (B4) si la vérification initiale (B3, IDV0) de l'identité de l'utilisateur n'est pas concluante.

3. Procédé selon l'une des revendications 1 et 2, dans lequel les informations (BCKDT) relatives à l'identité de l'utilisateur définissent une identité pivot de l'utilisateur qui comprend au moins le prénom de l'utilisateur, le nom de famille de l'utilisateur et la date de naissance de l'utilisateur, et dans lequel au moins une étape (IDV0, IDVi) de vérification de l'identité de l'utilisateur se rapporte à la vérification de son identité pivot.

4. Procédé selon l'une des revendications 1 à 3, dans lequel l'étape de restauration comprend, en relation avec la restauration d'au moins deux données secrètes par deux serveurs de sauvegarde, au moins deux étapes de vérification de l'identité de l'utilisateur différentes, et dans lequel deux étapes de vérification de l'identité de l'utilisateur différentes se fondent sur des informations différentes fournies par l'utilisateur, et/ou sur des méthodes différentes pour recueillir les informations fournies par l'utilisateur, et/ou sur des méthodes ou des algorithmes différents pour analyser les informations fournies par l'utilisateur.

5. Procédé selon l'une des revendications 1 à 4, dans lequel une étape de vérification de l'identité de l'utilisateur comprend une étape (D7-D11, D27-D34) d'acquisition d'au moins une photographie ou vidéo de l'utilisateur et/ou d'une pièce d'identité de l'utilisateur.

6. Procédé selon l'une des revendications 1 à 5, dans lequel des étapes de vérification de l'identité de l'utilisateur sont conduites par des services (IDVSi) exécutés par des serveurs (IDVSRVi) et comprennent des étapes automatisées de vérification de l'identité comprenant des étapes d'acquisition à distance d'informations à partir desquelles l'identité de l'utilisateur est vérifiée, les étapes d'acquisition à distance d'informations comprenant au moins deux des étapes suivantes :
- acquisition d'une photo d'une pièce d'identité comprenant une photo de l'utilisateur,
- acquisition d'une ou de plusieurs photos du visage de l'utilisateur,
- acquisition d'un enregistrement vidéo montrant le visage de l'utilisateur en mouvement,
- acquisition d'une justification de domicile,
- acquisition d'une empreinte digitale de l'utilisateur,
- acquisition d'un code de validation reçu par l'utilisateur dans un message,
- activation par l'utilisateur d'un lien reçu par l'utilisateur dans un message, et
- acquisition d'un hologramme présent sur une pièce d'identité.

7. Procédé selon la revendication 6 comprenant, lorsque les étapes automatisées de vérification de l'identité de l'utilisateur ne sont pas concluantes, des étapes de vérification de l'identité de l'utilisateur conduites par des personnes physiques, telles que la conduite d'un entretien téléphonique avec l'utilisateur, la conduite d'une vidéo conférence avec l'utilisateur, la conduite d'un entretien en face à face avec l'utilisateur, la validation d'un parcours scolaire ou d'un parcours d'employé de l'utilisateur.

8. Procédé selon l'une des revendications 1 à 7, dans lequel le programme orchestrateur (ORC1) est configuré pour :
- lors de la restauration des données, recevoir de chaque serveur de sauvegarde (BCKi) configuré pour conduire une vérification de l'identité de l'utilisateur une information sur le succès de la vérification d'identité conduite par le serveur de sauvegarde, et
- si un nombre déterminé de serveurs de sauvegarde (BCKi) n'a pas vérifié avec succès l'identité de l'utilisateur, suspendre le processus de restauration des données dans son ensemble, y compris par les serveurs qui ont vérifié avec succès l'identité de l'utilisateur, et optionnellement soumettre l'utilisateur à une étape supplémentaire de vérification de son identité.

9. Procédé selon l'une des revendications 1 à 8, dans lequel le programme orchestrateur est également configuré pour recevoir de chaque serveur de sauvegarde, lors de la restauration des données, un score de certitude quant à vérification de l'identité de l'utilisateur, et si la moyenne des scores est inférieure à un premier seuil, ou si l'un des scores est inférieur à un deuxième seuil, suspendre le processus de restauration des données dans son ensemble et optionnellement soumettre l'utilisateur à une étape supplémentaire de vérification de son identité.

10. Procédé selon l'une des revendications 1 à 9 dans lequel :
- le premier portefeuille de cryptoactifs est configuré pour générer la pluralité de données secrètes (Si) à partir du secret (S) au moyen d'une fonction de partage de secret configurée pour générer un nombre m de données secrètes et permettre la reconstitution du secret (S) à partir d'un seuil de n données secrètes (Si), et
- le deuxième portefeuille de cryptoactifs est configuré pour reconstituer le secret à partir d'au moins n données secrètes (Si) reçues lors de l'étape de restauration.

11. Procédé selon l'une des revendications 1 à 10, dans lequel le premier (CW1, HW, HDV) et le deuxième (CW1, HW, HDV) portefeuilles de cryptoactifs comprennent chacun un portefeuille matériel (HW, HW') dépourvu de moyen de connexion à l'Internet et un dispositif hôte (HDV) pourvu d'une connexion à l'Internet et exécutant un logiciel compagnon (HSW).

12. Procédé selon l'une des revendications 1 à 11, mis en œuvre avec trois serveurs de sauvegarde et utilisant une fonction de partage de secret (SS) configurée pour générer m données secrètes à partir du secret et permettre la reconstitution du secret à partir d'au moins n données secrètes, n étant inférieur à m.

## Patentansprüche

1. Verfahren für die Sicherung und Wiederherstellung eines Geheimnisses (S), das von einem ersten Krypto-Asset-Wallet (CW1, HW, HDV, CW2, CW3) gehütet wird, das Eigentum eines Benutzers (USR) ist, wobei das Krypto-Asset-Wallet ein Hardware-Wallet (HW) für die Cold-Storage-Speicherung des Geheimnisses umfasst, **dadurch gekennzeichnet, dass** es die folgenden Schritte umfasst:
- Bereitstellen eines Orchestrator-Programms (ORC1, ORC2), das von einem Server (ORCSRV1, ORCSRV2) ausgeführt wird, und einer Vielzahl von Sicherungsservern (BCKi),
- Einrichten (B5) eines verschlüsselten Kommunikationskanals zwischen dem Krypto-Asset-Wallet und dem Orchestrator-Programm,
- Generieren (B9), mittels des Krypto-Asset-Wallets, einer Vielzahl von geheimen Daten (Si) aus dem Geheimnis (S), Verschlüsseln (B10) der geheimen Daten ({Si}kBi) und Übertragen (B11) jedes verschlüsselten Datums an das Orchestrator-Programm,
- Übertragen (B12), mittels des Orchestrator-Programms, eines der geheimen Daten in seiner verschlüsselten Form ({Si}kBi) an jeden Sicherungsserver (BCKi),
- Entschlüsseln (B13), in jedem Sicherungsserver, der Daten und Sichern derselben durch Zuordnen zu der Identität des Benutzers,
- wobei dem Schritt des Sicherns (B10 bis B13) der geheimen Daten Schritte vorausgehen, bestehend aus:
- Verbinden (IDV0), mittels des Krypto-Asset-Wallets und über das Orchestrator-Programm, des Benutzers mit einem Server (IDVSRV0, IDVS0) zum Überprüfen der Identität,
- Sammeln, mittels des Servers (IDVSRV0, IDVS0) zum Überprüfen der Identität, von Informationen (BCKDT) in Bezug auf die Identität des Benutzers (B3, IDV0), und Überprüfen (B3, IDV0) der Informationen in Bezug auf die Identität des Benutzers, und
- Kommunizieren (B6), mittels des Orchestrator-Programms, der Informationen (BCKDT) in Bezug auf die überprüfte Identität des Benutzers an jeden Sicherungsserver,
**dadurch gekennzeichnet, dass** es den Schritt umfasst bestehend aus:
- Wiederherstellen (R1 bis R14) des Geheimnisses in einem zweiten Krypto-Asset-Wallet (CW1, HW', HDV, CW2, CW3) aus allen oder einem Teil der geheimen Daten, die von den Sicherungsservern gehütet werden, wobei dem Wiederherstellungsschritt (R1 bis R14) eine Vielzahl von Schritten (R7, IDVi) zum Überprüfen der Identität des Benutzers durch mindestens einen Teil der Sicherungsserver vorausgeht, wobei ein Sicherungsserver, der konfiguriert ist, um die Identität des Benutzers zu überprüfen, auch konfiguriert ist, um die Rückgabe des von ihm gehüteten geheimen Datums zu verweigern, wenn die Überprüfung der Identität des Benutzers nicht schlüssig ist.

2. Verfahren nach Anspruch 1, wobei der Schritt des Sicherns (B10 bis B12) der geheimen Daten nicht durchgeführt wird (B4), wenn die anfängliche Überprüfung (B3, IDV0) der Identität des Benutzers nicht schlüssig ist.

3. Verfahren nach einem der Ansprüche 1 und 2, wobei die Informationen (BCKDT) in Bezug auf die Identität des Benutzers ein Identity-Pivot des Benutzers definieren, das mindestens den Vornamen des Benutzers, den Nachnamen des Benutzers und das Geburtsdatum des Benutzers umfasst, und wobei sich mindestens ein Schritt (IDV0, IDVi) des Überprüfens der Identität des Benutzers auf die Überprüfung seines Identity-Pivot bezieht.

4. Verfahren nach einem der Ansprüche 1 bis 3, wobei der Schritt des Wiederherstellens, in Verbindung mit der Wiederherstellung von mindestens zwei geheimen Daten durch zwei Sicherungsserver, mindestens zwei unterschiedliche Schritte des Überprüfens der Identität des Benutzers umfasst, und wobei zwei unterschiedliche Schritte des Überprüfens der Identität des Benutzers auf unterschiedlichen durch den Benutzer bereitgestellten Informationen und/oder auf unterschiedlichen Verfahren zum Sammeln der durch den Benutzer bereitgestellten Informationen und/oder auf unterschiedlichen Verfahren oder Algorithmen zum Analysieren der durch den Benutzer bereitgestellten Informationen basieren.

5. Verfahren nach einem der Ansprüche 1 bis 4, wobei ein Schritt des Überprüfens der Identität des Benutzers einen Schritt (D7 bis D11, D27 bis D34) des Erfassens von mindestens einer Fotografie oder einem Video des Benutzers und/oder eines Ausweisdokuments des Benutzers umfasst.

6. Verfahren nach einem der Ansprüche 1 bis 5, wobei Schritte des Überprüfens der Identität des Benutzers durch Dienste (IDVSi) durchgeführt werden, die von Servern (IDVSRVi) ausgeführt werden, und automatisierte Schritte des Überprüfens der Identität umfassen, umfassend Schritte des Erfassens von Informationen aus der Ferne, anhand derer die Identität des Benutzers überprüft wird, wobei die Schritte des Erfassens von Informationen aus der Ferne mindestens zwei der folgenden Schritte umfassen:
- Erfassen eines Fotos eines Ausweisdokuments, umfassend ein Foto des Benutzers,
- Erfassen eines oder mehrerer Fotos des Gesichts des Benutzers,
- Erfassen einer Videoaufzeichnung, die das Gesicht des Benutzers in Bewegung zeigt,
- Erfassen eines Wohnsitznachweises,
- Erfassen eines Fingerabdrucks des Benutzers,
- Erfassen eines durch den Benutzer in einer Nachricht empfangenen Validierungscodes,
- Aktivieren eines Links durch den Benutzer, der durch den Benutzer in einer Nachricht empfangen wurde, und
- Erfassen eines auf einem Ausweisdokument befindlichen Hologramms.

7. Verfahren nach Anspruch 6, umfassend, wenn die automatisierten Schritte des Überprüfens der Identität des Benutzers nicht schlüssig sind, Schritte des Überprüfens der Identität des Benutzers, die von natürlichen Personen durchgeführt werden, wie Durchführen eines Telefongesprächs mit dem Benutzer, Durchführen einer Videokonferenz mit dem Benutzer, Durchführen eines persönlichen Gesprächs mit dem Benutzer, Validieren eines schulischen Werdegangs oder eines beruflichen Werdegangs des Benutzers.

8. Verfahren nach einem der Ansprüche 1 bis 7, wobei das Orchestrator-Programm (ORC1) konfiguriert ist zum:
- Empfangen, während der Wiederherstellung der Daten, von jedem Sicherungsserver (BCKi), der zum Durchführen einer Überprüfung der Identität des Benutzers konfiguriert ist, einer Information über den Erfolg der durch den Sicherungsserver durchgeführten Identitätsüberprüfung, und
- wenn eine bestimmte Anzahl von Sicherungsservern (BCKi) die Identität des Benutzers nicht erfolgreich verifiziert hat, Aussetzen des Datenwiederherstellungsprozesses in seiner Gesamtheit, einschließlich durch die Server, welche die Identität des Benutzers erfolgreich überprüft haben, und optional Unterziehen des Benutzers einem zusätzlichen Schritt des Überprüfens seiner Identität.

9. Verfahren nach einem der Ansprüche 1 bis 8, wobei das Orchestrator-Programm ferner konfiguriert ist, um während der Wiederherstellung der Daten von jedem Sicherungsserver einen Gewissheitswert hinsichtlich der Überprüfung der Identität des Benutzers zu empfangen, und, wenn der Durchschnitt der Werte unter einem ersten Schwellenwert liegt oder wenn einer der Werte unter einem zweiten Schwellenwert liegt, Aussetzen des Datenwiederherstellungsprozesses in seiner Gesamtheit, und optional Unterziehen des Benutzers einem zusätzlichen Schritt des Überprüfens seiner Identität.

10. Verfahren nach einem der Ansprüche 1 bis 9, wobei:
- das erste Krypto-Asset-Wallet konfiguriert ist, um die Vielzahl von geheimen Daten (Si) aus dem Geheimnis (S) mittels einer Geheimnisteilungsfunktion zu generieren, die konfiguriert ist, um eine Anzahl m von geheimen Daten zu generieren und die Wiederherstellung des Geheimnisses (S) aus einem Schwellenwert von n geheimen Daten (Si) zu ermöglichen, und
- das zweite Krypto-Asset-Wallet konfiguriert ist, um das Geheimnis aus mindestens n geheimen Daten (Si) wiederherzustellen, die während des Schrittes des Wiederherstellens empfangen wurden.

11. Verfahren nach einem der Ansprüche 1 bis 10, wobei das erste (CW1, HW, HDV) und das zweite (CW1, HW', HDV) Krypto-Asset-Wallet jeweils ein Hardware-Wallet (HW, HW'), das kein Mittel für die Verbindung mit dem Internet aufweist, und eine Host-Vorrichtung (HDV), die über eine Internetverbindung verfügt und eine Begleitsoftware (HSW) ausführt, umfassen.

12. Verfahren nach einem der Ansprüche 1 bis 11, das mit drei Sicherungsservern implementiert wird und eine Geheimnisteilungsfunktion (SS) verwendet, die konfiguriert ist, um m geheime Daten aus dem Geheimnis zu generieren und die Wiederherstellung des Geheimnisses aus mindestens n geheimen Daten zu ermöglichen, wobei n kleiner als m ist.

## Claims

1. A method for backing up and restoring a secret (S) held by a first cryptoasset wallet (CW1, HW, HDV, CW2, CW3) that is owned by a user (USR), the cryptoasset wallet comprising a hardware wallet (HW) for cold storage of the secret, **characterized in that** it comprises the steps of:
- providing an orchestrator program (ORC1, ORC2) executed by a server (ORCSRV1, ORCSRV2), and a plurality of backup servers (BCKi),
- establishing (B5) an encrypted communication channel between the cryptoasset wallet and the orchestrator program,
- by means of the cryptoasset wallet, generating (B9) a plurality of secret data (Si) from the secret (S), encrypting (B10) the secret data ({Si}kBi) and transferring (B11) each encrypted data to the orchestrator program,
- by means of the orchestrator program, transferring (B12) to each backup server (BCKi) one of the secret data, in its encrypted form ({Si}kBi),
- in each backup server, decrypting the data (B13) and backing it up by associating it with the user's identity,
- the step of backing up (B10-B13) the secret data being preceded by the steps of:
- by means of the cryptoasset wallet, and through the orchestrator program, putting in contact (IDV0) the user with an identity verification server (IDVSRV0, IDVS0),
- by means of the identity verification server (IDVSRV0, IDVS0), collecting information (BCKDT) relating to the user's identity (B3, IDV0), and verifying (B3, IDV0) the information relating to the user's identity, and
- by means of the orchestrator program, communicating (B6) to each backup server, the information (BCKDT) relating to the verified identity of the user,
and **in that** it comprises the step of:
- restoring (R1-R14) the secret in a second cryptoasset wallet (CW1, HW', HDV, CW2, CW3) from all or part of the secret data held by the backup servers, the restoration step (R1-R14) being preceded by a plurality of steps (R7, IDVi) of verification of the user's identity by at least part of the backup servers, a backup server configured to verify the user's identity being also configured to refuse to return the secret data it holds if the verification of the user's identity is not conclusive.

2. The method according to claim 1, wherein the step of backing up (B10-B12) the secret data is not performed (B4) if the initial verification (B3, IDV0) of the user's identity is not conclusive.

3. The method according to one of claims 1 and 2, wherein the information (BCKDT) relating to the user's identity defines a pivot identity of the user which includes at least the user's first name, last name, and date of birth, and wherein at least one step (IDV0, IDVi) of verification of the user's identity relates to the verification of their pivot identity.

4. The method according to one of claims 1 to 3, wherein the restoration step comprises, in relation to the restoration of at least two secret data by two backup servers, at least two different steps of verification of the user's identity, and wherein two different steps of verification of the user's identity are based on different information provided by the user, and/or on different methods for collecting the information provided by the user, and/or on different methods or algorithms for analyzing the information provided by the user.

5. The method according to one of claims 1 to 4, wherein a step of verification of the user's identity comprises a step (D7-D11, D27-D34) of acquisition of at least one photograph or video of the user and/or of an identity document of the user.

6. The method according to one of claims 1 to 5, wherein steps of verification of the user's identity are conducted by services (IDVSi) executed by servers (IDVSRVi) and comprise automated steps of identity verification including steps of remote acquisition of information from which the user's identity is verified, the steps of remote acquisition of information comprising at least two of the following steps:
- acquisition of a photo of an identity document including a photo of the user,
- acquisition of one or more photos of the user's face,
- acquisition of a video recording showing the user's face in motion,
- acquisition of proof of residence,
- acquisition of a fingerprint of the user,
- acquisition of a validation code received by the user in a message,
- activation by the user of a link received by the user in a message, and
- acquisition of a hologram present on an identity document.

7. The method according to claim 6, comprising, when the automated steps of verification of the user's identity are not conclusive, steps of verification of the user's identity conducted by natural persons, such as conducting a telephone interview with the user, conducting a video conference with the user, conducting a face-to-face interview with the user, validation of a school or employment career of the user.

8. The method according to one of claims 1 to 7, wherein the orchestrator program (ORC1) is configured to:
- during data restoration, receive from each backup server (BCKi) configured to conduct a verification of the user's identity information on the success of the identity verification conducted by the backup server, and
- if a determined number of backup servers (BCKi) have not successfully verified the user's identity, suspend the data restoration process as a whole, including by servers that have successfully verified the user's identity, and optionally subject the user to an additional step of verification of their identity.

9. The method according to one of claims 1 to 8, wherein the orchestrator program is also configured to receive from each backup server, during data restoration, a certainty score regarding the verification of the user's identity, and if the average of the scores is below a first threshold, or if one of the scores is below a second threshold, suspend the data restoration process as a whole and optionally subject the user to an additional step of verification of their identity.

10. The method according to one of claims 1 to 9, wherein:
- the first cryptoasset wallet is configured to generate the plurality of secret data (Si) from the secret (S) by means of a secret sharing function configured to generate a number m of secret data and allow the reconstruction of the secret (S) from a threshold of n secret data (Si), and
- the second cryptoasset wallet is configured to reconstruct the secret from at least n secret data (Si) received during the restoration step.

11. The method according to one of claims 1 to 10, wherein the first (CW1, HW, HDV) and second (CW1, HW', HDV) cryptoasset wallets each comprise a hardware wallet (HW, HW') devoid of means of connection to the Internet and a host device (HDV) provided with an Internet connection and executing companion software (HSW).

12. The method according to one of claims 1 to 11, implemented with three backup servers and using a secret sharing function (SS) configured to generate m secret data from the secret and allow the reconstruction of the secret from at least n secret data, n being less than m.
